(19) Europäisches Patentamt
European Patent Office
Office européen des brevets

(11) **EP 2 284 795 A2**

(12) **EUROPÄISCHE PATENTANMELDUNG**

(43) Veröffentlichungstag:
**16.02.2011 Patentblatt 2011/07**

(51) Int Cl.:
**G06T 7/00** *(2006.01)*    **G06T 7/20** *(2006.01)*
**G06T 11/00** *(2006.01)*

(21) Anmeldenummer: **10182175.9**

(22) Anmeldetag: **08.03.2002**

(84) Benannte Vertragsstaaten:
**AT BE CH CY DE DK ES FI FR GB GR IE IT LI LU MC NL PT SE TR**

(30) Priorität: **08.03.2001 DE 10111226**
**11.09.2001 DE 10144629**

(62) Dokumentnummer(n) der früheren Anmeldung(en) nach Art. 76 EPÜ:
**02702403.3 / 1 444 654**

(71) Anmelder: **UNIVERSITE JOSEPH FOURIER**
**38041 Grenoble Cédex 9 (FR)**

(72) Erfinder: **Die Erfindernennung liegt noch nicht vor**

(74) Vertreter: **Vossius & Partner**
**Siebertstrasse 4**
**81675 München (DE)**

Bemerkungen:
Diese Anmeldung ist am 29-09-2010 als Teilanmeldung zu der unter INID-Code 62 erwähnten Anmeldung eingereicht worden.

(54) **Quantitative Analyse, Visualisierung und Bewegungskorrektur in dynamischen Prozessen**

(57) Femurbeispiel für Visualisierung und quantitative Analyse, s. Fieres et al. (DAGM 2001) sowie Figuren 8-10;
Anwendung zur Analyse der Zellmembran-, sowie Chromatindynamik (Figur 10), Visualisierung der Bahnen von Punkten in einzelnen Zellen. Dynamik von körnigen Strukturen in Metall während des Erhitzungsprozesses; Analyse und Visualisierung der Bewegung des Herzens, der Lunge, bei Tumorwachstum aber auch bei Gewebeschnitten;
Dynamik der Zellkernhülle (Membranen und Lamina) während der Mitose (insbesondere im Anfangsstadium ihres Zusammenbruchs (Figur 9, Beaudouin et al. Nuclear envelope breakdown proceeds by microtubule-induced tearing of the lamina. Cell Vol. 108, 83-96, 2002, Mattes et al. New tools for visualization and quantification in dynamic processes : Application to the nuclear envelope dynamics during mitosis. MICCAI 1323-1325, 2001)

a) vor der (rigiden) Registrierung     b) ein Zwischenschritt der Registrierung

c) nach der Registrierung

Figur 1: Die markierten Zentrosomen auf Chromosomen in einem Zellkern, der sich bewegt. Grün: erster Zeitschritt, Rosa: 2. Zeitschritt. Die Korrespondenzen sind vor der globalen Registrierung automatisch mittels eines Trackingverfahrens nicht zu finden, aber danach offensichtlich.

**Beschreibung**

Die Erfindung betrifft die quantitative Analyse und/oder Visualisierung (virtueller oder realer) bewegter Prozesse, sowie dabei die Erfassung, Beschreibung, Korrektur und der Vergleich globaler Bewegungsmechanismen innerhalb des Bildraums (Zeit-Raums). Insbesondere betrifft sie ein Verfahren und eine Vorrichtung zur präzisen und auf wenige Parameter beschränkten (konzisen) quantitativen Beschreibung der globalen und lokalen im Bildraum stattfindenden Bewegung (nicht nur von Objekten sondern auch innerhalb und zwischen Objekten) und zur eingängigen Darstellung der Bewegung und der quantitativen Parameter in Bezug auf den Bildraum. Hierbei verstehen wir unter einem virtuellen bewegten Prozess die Hintereinanderschaltung von Bildern (oder Punktmengen) vergleichbarer Objekte (z.B. gleicher Organe verschiedener Individuen). Die Quantitative Analyse, Visualisierung und Bewegungskorrektur in dynamischen Prozessen ermöglicht ein besseres Verständnis für Ursachen der Bewegung zu entwickeln, Vorhersagen zu treffen und Zusammenhänge zwischen Bewegungsparametern und Begleitumständen zu finden. Ein Beispiel ist die Untersuchung der Elastizitätseigenschaften von Zellstrukturen.

Durch bildgebende Vorrichtungen sind neue Möglichkeiten gegeben worden, Objekte (oder allgemeiner: Materie/Stoffe) zu vergleichen oder verschiedene Zustände oder die Bewegung eines Objekts zu analysieren und visuell eingängig (leicht erfassbar) darzustellen. Dies kann mittels eines Computers durchgeführt und automatisiert werden. Große Fortschritte sind dabei in der Extrahierung und Darstellung von Oberflächen, aber auch in der Berechnung von Geschwindigkeitsfeldern erzielt worden. Für Bilder, die mehrere nebeneinanderliegende Objekte enthalten, sind Verfahren vorgeschlagen worden, die einzelne Objekte verfolgen und die Bahnen der Objekte als 3D gerenderte (surface rendering) Linien oder Schläuche zu visualisieren.

Treten globale Bewegungsmechanismen auf, die die Bewegung der einzelnen Objekte dominieren, so führt dies zu einer falschen Zuordnung der Objekte auf den verschiedenen Bildern und damit auch zu falschen Bahnen. Schwierigkeiten stellen auch große lokale Verschiebungen von einem Bild zum nächsten dar, die einen rein grauwertbasierten Ansatz zur Bestimmung der Bewegung (wie z.B. bei Optischen-Fluss-Methoden) sehr erschweren. Beide Fälle kommen beispielsweise dann vor, wenn die zeitliche Auflösung zugunsten der räumlichen Auflösung nicht besonders fein gewählt wurde.

Die präzise und konzise quantitative Beschreibung der Bewegung ist eine weitere Schwierigkeit, die weit über das Berechnen von Geschwindigkeitsfeldern hinaus geht. Dabei geht es sowohl darum, den globalen Bewegungstyp zu erfassen und quantitativ mit wenigen Parametern zu beschreiben, als auch darum (insbesondere falls keine dominierende globale Dynamik vorherrscht), einige wenige lokal verschiedene Bewegungsarten zu erkennen und räumlich zu trennen; und schließlich darum, lokale Phänomene zu bewerten. Die konzise Beschreibung vereinfacht den Vergleich verschiedener Bewegungen in unterschiedlichen Bildfolgen. Ein besonderes Problem stellt es dar, in Bildern, die verhältnismäßig wenig Struktur aufweisen, die also nur an Stellen der Oberfläche weniger Objekte eine nicht gleichförmige Grauwerttextur aufweisen, möglichst die Bewegung zu rekonstruieren, die der realen im Bildraum stattfindenden Bewegung entspricht. Treten dabei (nicht-rigide aber) relativ globale Deformierungen auf, so stellt es ein Problem dar, ein Bewegungsmodell zu definieren, das keine lokalen Strukturen des Bildes/der Oberflächenform zerstört und robust ist gegenüber Rauschen bzw. Punkten, die nicht zum untersuchten Objekt gehören.

Im Stand der Technik wurden für die Analyse und Visualisierung bewegter Prozesse Methoden zur Bestimmung des optischen Flusses, sowie Partikel-Tracking und Oberflächen-Tracking und -Registrierung vorgeschlagen.

Optische-Fluss-Methoden (für einen Überblick siehe Barron J. L. et al., Performance of optical flow techniques, Int. J. Comp. Vision, 12: 43-77,1994) basieren auf der Annahme, dass die optischen Dichten (Intensitäten) über die Zeit erhalten bleiben. Sie berechnen für jeden Bildpunkt einen Bewegungsvektor und gestatten es daher, Geschwindigkeiten für jeden Punkt in Raum und Zeit zu quantifizieren und als Geschwindigkeitsvektorfeld zu visualisieren. Sie gestatten jedoch keine kontinuierliche Visualisierung (über mehr als 2 Bilder), und sie setzen voraus, dass der Zeitabstand im Vergleich zur örtlichen Veränderungen von Strukturen im Bild klein ist, sowie dass keine Beleuchtungsänderungen oder andere Störungen im Zeitverlauf auftreten, und sie sind lokal formuliert (mit Regularisierungsterm).

Eine Ausnahme ist F. Germain et al. (Characterization of Cell Deformation and Migration using a parametric estimation of image motion, IEEE Trans. Biomed. Eng., 46, 584-600, 1999) wo die Parameter eines affines Bewegungsmodells berechnet und analysiert werden. Diese Berechnung und Analyse geschieht aber zeitlich nur lokal, d.h. sie wird für je zwei Zeitschritte getrennt ausgeführt . So kann zum Beispiel der Unterschied, ob Objekte stets in die gleiche Richtung verzerrt werden oder aber in jeweils verschiedene Richtungen, nicht quantifiziert werden. Dies ist jedoch für die resultierende Verformung des Objekts essentiell. Unser Ansatz gestattet eine kontinuierliche quantitative Analyse und bietet zudem die Möglichkeit einer Visualisierung des Fehlers zur Referenzdynamik für jeden Punkt - auch für globale Deformationen, beschrieben mit mehr Freiheitsgraden als für eine affine Abbildung, und für lokale Bewegungen.

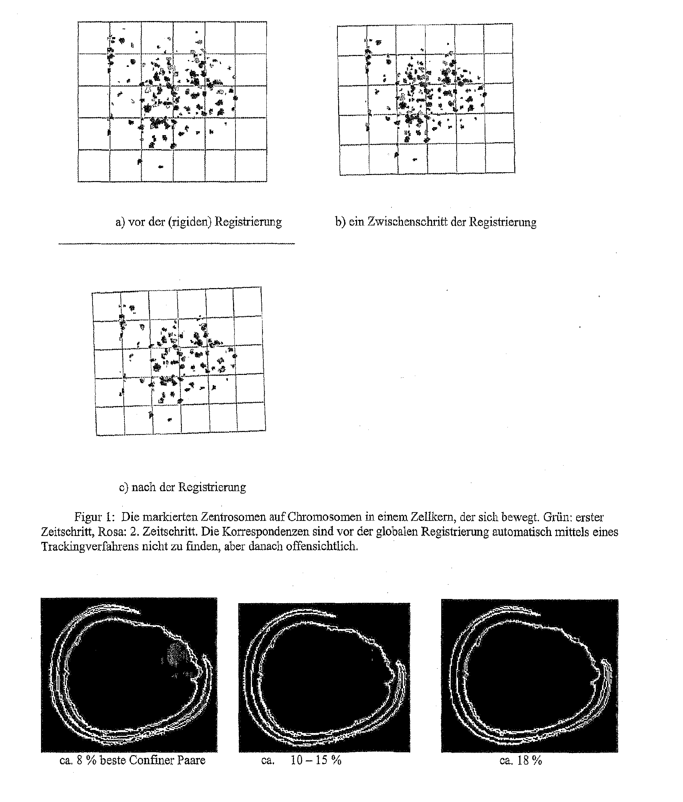

Beim Partikel-Tracking (Eils, Tvarusko und Bentele, Zeitaufgelöste Analyse und/oder Visualisierung dynamischer Prozesse in dynamischen biologischen Systemen, Offenlegungsschrift DPMA 199 30 598.6, 1998/9) werden zuvor extrahierte Objekte (bzw. Objektschwerpunkte) innerhalb von Bildfolgen verfolgt, deren Dynamik quantifiziert und die Bahnen kontinuierlich dargestellt. Dafür ist entscheidend, die individuellen Objekte in aufeinanderfolgenden Bildern zu detektieren und zu identifizieren (wiederzufinden). Dies wird durch eine Kombination von Kriterien der Objektnähe und Objektähnlichkeit (ähnlicher Flächeninhalt, durchschnittlicher Grauwert, etc.) ermöglicht. Diese Verfahren (insbesondere das Verfahren nach Eils et al.) schlagen fehl, falls sich alle Objekte ähneln, falls für einen Zeitschritt ein Objekt nicht segmentiert (detektiert) wurde und falls die Dynamik der individuellen Partikel von einer globalen Dynamik dominiert wird. Diese Situation wird in der Figur 1 dargestellt. Unser Verfahren, das auch einen Registrierungsschritt enthält, erlaubt eine korrekte Erfassung der Bewegung auch in diesen Fällen und bietet im Teil Visualisierung und Quantifizierung neue und bessere Möglichkeiten besonders für komplexe Bildstrukturen (animiertes, 3D gerendertes Referenzgitter, Verwendung von charakteristischen Bild/Oberflächenpunkten deren 3D gerenderte Bahnen dargestellt werden, die Bahn durch einen interaktiv wählbaren Punkt, der an einem beliebigen Ort im Zeit-Raum liegen kann, die Bestimmung von Regionen homogener oder lokal besonders starker Bewegung u.a.). In diesem Zusammenhang möchten wir darauf hinweisen, dass wir den Begriff Matching (und matchen) im Sinne von Registrierung verwenden, das heisst das Bestimmen von Parametern eines Bewegungsmodells, durch die ein Bild (oder ein Objekt) so transformiert wird, dass es möglichst gut in ein anderes übergeht, und nicht wie Eils et al. im Sinne einer Identifizierung (Zuordnung) von Punkten zweier Punktmengen, z.B. Oberflächenpunkten zweier Oberflächen.

In (J.M. Odobez and P. Bouthemy, Detection of multiple moving objects using multiscale MRF with camera motion compensation, ICIP'94) wird ein Ansatz zur Analyse (Objekterkennung) in bewegten Prozessen vorgeschlagen, der die Kompensierung der globalen Kamerabewegung einschließt. Der Ansatz kompensiert die globale Bewegung jedoch implizit um das optische Fluß Feld zu berechnen, ohne Möglichkeiten einer bewegungskompensierten Visualisierung aufzuzeigen oder Objektbahnen zu visualisieren (weder mit Korrektur der globalen Bewegung noch Objektbahnen überhaupt), und ohne eine Zwei-Schritte-Strategie zu beinhalten, bei der die Kompensierung der globalen Bewegung die lokale identifizierung von Objekten im zweiten Schritt erst ermöglicht.

Die Korrektur von Bewegung kann auch dann nötig sein, wenn Steilen veränderter Graufärbung (z.B. in Angiogrammen) in Bildern bewegter Objekte (z.B. Patienten) detektiert werden sollen. 1.A. Boesnach et al. (Compensation of motion artifacts in MR mammography by elastic deformation, SPIE Medical Imaging 2001) schlagen einen Ansatz lokaler Registrierung zur Kompensierung von Patientenbewegungen vor, die es erlaubt, Stellen erhöhter Konzentration eines Kontrastmittels von Stellen veränderter Grauwerten, die durch Bewegung hervorgerufen wurden, zu unterscheiden. Dieser Ansatz enthält ebenfalls keine kontinuierliche Visualisierung und zudem nur eine lokale Registrierung und sieht daher auch nicht vor, globale (Referenz-) Dynamiken zu quantifizieren, zu visualisieren und zu kompensieren. Er ist ebenfalls nicht für das tracking in Bildfolgen, die auch eine globale Dynamik enthalten, geeignet und vorgesehen.

Für die Visualisierung dynamischer Parameter bei der Bewegung von Oberflächen wurde die Oberfläche solchermaßen gefärbt, dass die Länge der Bewegungsvektoren farbkodiert dargestellt wird (Ferrant et al., Real-time simulation and visualization of volumetric brain deformation for image guided neurosurgery, SPIE Medical Imaging 2001). Bei der Registrierung wurde nur die Oberfläche und nicht der gesamte Raum transformiert. Wir stellen hier nicht nur ein umfassenderes Visualisierungskonzept vor, das den gesamten Bildraum einschließt, sondern visualisieren auch Parameter, die nur als Ergebnis des Gesamtverfahrens erhalten werden können.

Um Datensätze verschiedener Zeitschritte zu überlagern, werden oft zunächst Punktdaten aus Bilddaten extrahiert (falls nicht schon Punktdaten vorliegen, wie bei Kontakt-Scannern), aufgrund derer dann die Überlagerung bestimmt wird. Mattes und Demongeot (Structural outlier detection for automatic landmark extraction, SPIE Medical Imaging 2001, Vol. 4322 I: 602-610) extrahieren dabei die Konturen von Confinern. Diese sind für eine gegebene GrauwertdichteFunktion als die maximal zusammenhängenden Teilmenge der level-sets definiert. Sie definieren (durch Mengeninklusion) eine Baumstruktur (Confinement-Tree), falls sie für verschiedene Grauwert-Niveaus einschließlich des Null-Niveaus extrahiert werden. Unrelevante Confiner können anschließend beim Filtern des Baumes gelöscht werden. Für zwei Grauwertbilder werden dann zunächst paarweise korrespondierende Confiner gesucht, die Übereinstimmung der Confiner eines Paares wird bewertet, und danach werden Paare verworfen mit zu geringer Übereinstimmung. Auf Grundlage der verbleibenden Paare (z.B. ihrer Schwerpunkte oder Konturen) werden dann die Bilder überlagert. Es existiert bisher jedoch noch keine Auswertung für eine iterative Anwendung dieses Verfahrens, die auch die Rolle der Parameter (z.B., Anzahl der verworfenen Confiner-Paare oder Anzahl der gestutzten Confiner) untersuchen könnte.

Um solchermaßen extrahierte Punkte nicht-rigid zu überlagern, muss ein Bewegungsmodell vorgegeben werden. Szeliski und Lavallée (IJCV 1996) verwenden trilineare B-splines, deren Kontrollpunkte auf einem Octree-Gitter um die extrahierte Punktmenge angeordnet sind, mit höherer Auflösung näher zur Oberfläche. Durch die verschiedenen Niveaus im Octree können zunächst wenige, dann immer mehr Kontrollpunkte verwendet werden, wodurch "von Grob-zu-Fein" registriert werden kann. Um die Punktmengen präzise zu überlagern, sind jedoch (wegen mangelnder Glattheit der trilinearen B-Splines) viele Kontrollpunkte (das heißt Freiheitsgrade der Transformation) nötig, die zudem nach dem regelmäßigen Octree-Schema angeordnet sein müssen und nicht einfach beliebig im Raum verteilt werden können. Das Registrieren mit zu vielen Freiheitsgraden birgt jedoch die Gefahr, lokale Strukturen zu zerstören und sehr sensitive Regularisierungsparameter zu erhalten.

Chui und Rangarajan (CVPR 2000) verwenden thin-plate splines und jeden extrahierten Punkt als Kontrollpunkt. Dies ist schon vom Rechenaufwand her jedoch höchstens bei kleinen Punktmengen sinnvoll. Wir werden ein Verfahren vorschlagen, Kontrollpunkte zu setzen, das die gewünschte Bewegung mit besonders wenigen Freiheitsgraden präzise auffindet. Neben dem reduzierten Rechenaufwand hat dies die Vorteile, dass auf der einen Seite die Zerstörung von lokalen Formmerkmalen und das Fitten von Rauschen besser vermieden werden können, auf der anderen Seite haben die RegularisierungsParameter weniger Bedeutung (geringer Sensitivität), da die Transformation mit wenigen Parametern ohnehin glatter ist. Zudem erhält der Anwender eine konzisere Beschreibung der Bewegung, die auch für nachfolgende Schritte vorteilhaft sein kann, z.B. bei der Erstellung eines Active Shape Models (s. unten) auf Basis der initialen und finalen Position der Kontrollpunkte.

Zusammenfassend hat die Erfindung neben der (gerade beschriebenen) besseren und konziseren quantitativen Erfassung der Bewegung, gerade wenn große lokale Deformierungen auftreten, die Vorteile, eine kontinuierliche Zeit-Raum-Visualisierung auch innerhalb komplexer Objekte (und an deren Oberfläche) zu ermöglichen und dabei die Fehlerquelle der Objektbestimmung (-detektion) zu vermeiden. Das hier beschriebene Verfahren ermöglicht auch die Bestimmung von Regionen homogener Bewegung.

Das "Active Shape Model" (ASM ) oder Point Distribution Model (PDM) wurde in (T. F. Cootes, C.J. Taylor, D.H. Cooper, and J. Graham, Active shape models - their training and their application, Computer Vision and Image Understanding 61, 38-59, 1995) eingeführt, um statistisches Vorwissen bei der Objektsegmentierung einbringen zu können. Dabei wird für eine Anzahl von vorgegebenen Oberflächen, die Variationen einer Form darstellen, ein Oberflächenmodell mittels n Landmarken erstellt, die für jede Oberfläche so bestimmt werden, dass jede Landmarke auf allen Oberflächen vorkommt. Für ein Objekt wird dann ein Landmarkenvektor definiert, der die Raumkoordinaten für alle n Landmarken enthält und daher von der Dimension 3n ist. Die Menge aller Landmarkenvektoren bildet eine Punkteverteilung im $R^{3n}$. Auf diese Punkteverteilung wird eine Hauptkomponenten Analyse angewandt (bei besonders inhomogenen Verteilungen auch ein multimodales Mischmodell oder sogar eine kernel-Analyse) und die Punkteverteilung wird durch wenige Eigenwerte und Eigenräume charakterisiert, die nur einen Teilraum des Ausgangsraums darstellen. Zur Anwendung in der Modellgestützten Segmentierung wird dann das Optimierungsproblem gelöst, das in dem so bestimmten Teilraum die Objektoberfläche findet, die sich den Bilddaten besonders gut anpasst. Eine andere Anwendung ist die Extrapolierung von aufgenommenen Daten mit Hilfe des Models, um aus wenigen Daten die Oberfläche eines Objekts möglichst gut zu rekonstruieren (M. Fleute, S. Lavallée, Building a Complete Surface Model from sparse data using statistical shape models: application to computer assisted knee surgery, MICCAI'98, 880-887, LCNS Springer-Verlag,1998). Das "Active Shape Model" gestattet auch die Unterschiede verschiedener Objekte gleichen Typs anschaulich zu visualisieren. Es wurde jedoch nicht zur quantitativen Analyse in (virtuellen oder realen) bewegten Prozessen verwendet. Auch nicht zu einer automatischen Aufteilung der Oberfläche (oder des Raumes) in Regionen mit homogener (räumlich linearer) Dynamik.

Die vorliegende Erfindung soll die zuvor genannten Nachteile einzeln oder bevorzugt alle zusammen vermeiden.

Die vorliegende Erfindung betrifft ein Verfahren und eine Vorrichtung zur präzisen und konzisen quantitativen Beschreibung der globalen und lokalen im Bildraum stattfindenden Bewegung und zur eingängigen Darstellung der Bewegung und der quantitativen Parameter in Bezug auf den Bildraum, die Registrierung, Objekt/Punkte-Verfolgung, Visualisierung und die Bestimmung quantitativer Parameter von Bewegungsmodellen und Bewegungseigenschaften beinhalten. Insbesondere betrifft die Erfindung ein Verfahren und eine Vorrichtung, die es gestatten die stattgefundene Bewegung quantitativ zu bestimmen, die übereinstimmung von Objektbewegung und Referenzdynamiken (räumlich und zeitlich) zu quantifizieren und zu visualisieren, sowie einige wenige lokal verschiedene Bewegungsarten zu erkennen und räumlich zu trennen und lokale Bewegungs-Phänomene zu bewerten. Darüber hinaus gestattet es durch eine Grob-zu-Fein Registrierung das Erfassen und Kompensieren globaler Bewegungsmechanismen, was in der gezeigten Anwendung (Figur 1) die Verfolgung erst erlaubt und auch eine korrigierte Visualisierung ermöglicht. Das Erfassen der Bewegung, die der realen im Bildraum (im gesamten Raumvolumen) stattfindenden Bewegung möglichst genau entspricht, erfolgt durch eine "splines à plaques minces"-Registrierungstechnik, die es zudem gestattet, die Anzahl der Bewegungsparameter gering zu halten. Ein vollautomatischer Ablauf aller Teilschritte ist ermöglicht.

Das erfindungsgemäße Verfahren weist drei Teile bzw. Module auf: Modul 1 "Bildvorverarbeitung/Punktextrahierung", Modul 2 "Registrierung" und Modul 3 "Visualisierung/Quantitative Analyse", wobei Modul 2 und 3 auf verschiedene in Modul 1 extrahierten Punktmengen zurückgreifen können und eventuell Modul 2 nicht auf Punkte (Modul 1) zurückgreift. Modul 3 greift auf die in Modul 2 bestimmten quantitativen Daten zurück.

Die folgenden Punkte sind bevorzugte Ausführungsformen der vorliegenden Erfindung.

1) Verfahren zur quantitativen und visuellen Analyse von Bewegung in einer Zeitreihe von Bildern mit den Schritten:

a) Bestimmung des Bewegungsvektors für jeden Punkt im Bildraum zwischen Bildern von direkt oder nicht direkt aufeinanderfolgenden Zeitschritten (d.h. der Transformation des entsprechenden Bildraums) bevorzugt mittels rigider, affiner und/oder "elastischer" (lokale Deformierungen einschließender) Überlagerung/Registrierung von Bildern der Bildreihe und Berechnung der Transformations-Parameter mit den folgenden weiteren Verfahrensschritten:

a1) Bei der nicht-rigiden Registrierung werden schrittweise von grob zu fein zunächst globale und dann immer lokalere Transformationstypen vorgegeben,

a2) Bei mehr als zwei Zeitschritten wird, um die Transformation für nicht direkt aufeinanderfolgende Zeitschritte zu erhalten, die Transformation *nicht nur* paarweise für aufeinanderfolgende Bildpaare berechnet, sondern es wird noch ein Korrektur-Registrierungsschritt nachgeschaltet;

a3) aus der Transformation ergeben sich unmittelbar die lokalen, für jeden Punkt im Bild-/Zeitraum definierten, Größen Geschwindigkeit, Beschleunigung, Biegung, Spannung, Abweichung zu feinster Registrierung (d.h. Abstand zwischen Punkt transformiert bei Transformationstyp auf ausgewählter und auf lokaister Feinheitsstufe), etc., sowie die globalen Größen Biegungsenergie für die gesamte Bewegung, sowie für jeden "principal warp" getrennt (Bookstein 1989), Entropie, "Gerichtetheit" der Bewegung und die Transformationsparameter für verschiedene Feinheitsstufen der Transformation,

b) Rekonstruktion der Raum-Zeit-Struktur innerhalb des Bildraums und Visualisierung selbiger mittels

b1) (evt. interaktiver) Bestimmung eines Punktes (oder einer Region; oder nach regelmäßigem Schema ausgewählte Punkte im Raum oder auf der Oberfläche einer Region) für einen wählbaren Zeitpunkt, der automatischen Berechnung seiner (bzw. ihrer) Position für alle anderen Zeitpunkte anhand der in a) berechneten Transformation (für nicht aufeinanderfolgende Zeitschritte) sowie der interpolierten Darstellung als 3D gerenderte (surface rendering) Bahn (bzw. "Schlauch" für Regionen); und/oder

b2) eines 3D gerenderten Referenzgitters, deformiert gemäß der in a) berechneten Transformation, animiert (Interpolation von Zwischenzeitschritten) oder nicht (Animation auch kontinuierlich über mehrere Zeitschritte hinweg), dem Bildraum überlagert (eingeblendet) oder nicht; bei einer Bildaufnahme mit mehreren Farbkanälen können die Referenzgitter, die zu den verschiedenen, getrennt betrachteten Farbkanälen gehören, verschiedenfarbig aber gleichzeitig dargestellt werden; und/oder

b3) Farbkodierung/Musterkodierung (einschließlich Grauwertkodierung) von quantitativen Größen (vektorwertige Größen mittels Absolutbeträgen), die einem Punkt im Bild-/Zeitraum zugeordnet sind wie in a) beschrieben, insbesondere für (i) alle Punkte, die in einer interaktiv wählbaren Ebene im Bildraum liegen, (ii) interaktiv (oder regelmäßig) gewählte Punkte oder Oberflächenpunkte interaktiv gewählter Regionen/ Konturen/Oberflächen (iii) die Punkte der in b1) bestimmten Bahnen (bzw. Schläuche) des Zeitraums; und/ oder

b4) einer bewegungskorrigierten Darstellung der Bahnen (bzw. Schläuche), korrigiert um rigide, affine oder eine ausgewählte Stufe der nicht-globalen Transformation, oder mittels eines bewegungskorrigierten Abspielen der Ausgangsbildsequenz; insbesondere kann die Farbkodierung auf das Ausgangsbild oder einen anderen gegebenen Zeitpunkt rückprojiziert werden.

2) Verfahren nach Punkt 1, das in einem Vorverarbeitungsschritt a0) kritische (charakteristische) Punkte des Bildraums oder Oberflächenpunkte von Regionen im Bildraum extrahiert und diese in den Schritten b1), b3) und b4) anstelle interaktiv gewählter Punkte verwendet, wobei in Schritt b2) die (kritischen/Oberflächen-) Punkte des Ausgangsraums anstelle der Referenzgitter verwendet werden können.

3) Verfahren nach Punkt 2, das zur Vorverarbeitung die Confinement-Tree-Technik (CTT) verwendet, wobei

a) zur Visualisierung einer Region (eines confiners) der Anwender entweder auf einen Knoten im Baum klickt oder auf einen Punkt im Bild, worauf die Oberfläche/Kontur des kleinsten confiners (im gefilterten Baum) angezeigt wird, der diesen Punkt enthält; und/oder

b) die Registrierung auf Grundlage der extrahierten Punkte (confiner-Oberflächenpunkte oder kritische Punkte, z.B. confiner-Schwerpunkte) mittels eines Punktregistrierungs-Algorithmus erfolgt, wobei sich entsprechende confiner in Ausgangs- und Zielbild vorbestimmt werden bzw. ein Algorithmus basierend auf der Minimierung eines "ikonischen" Ähnlichkeitsmasses nachgeschaltet werden können; und/oder

c) transformierte confiner des Ausgangsbilds mit nicht transformierten confinern im Zielbild überlagert dargestellt werden, wobei die confiner-Oberflächen an die Stelle des Referenzgitters in 1b2) treten,und zu den Größen aus 1a3) der Abstand eines Punktes zum nächstgelegenen Punkt extrahiert im anderen Bild hinzukommt.

4) Verfahren zur Registrierung mittels CTT, das entweder

a) Confiner-Schwerpunkte (CS) oder -Dichtemaxima (CD) als kritische Punkte zur Registrierung verwendet und unter Anwendung der Methodik der strukturellen outlier Bestimmung (mittels relPos, s. Mattes und Demongeot 2001) ausgehend von einer initialen Überlagerung (evt. verbessert durch direkte Anwendung einer Punktregistrierungsmethode, s. 6)) zunächst sich entsprechende confiner-Paare bestimmt und dabei nur die Paare mit bestem relPos beibehält (evt. Gemäß 6(i)), auf Grund dieser (deren CD, CS, oder Confiner-Konturen) die best fittende (im Sinne des Fehlerfunktinals s. 6) sowie Fieres et al. 2001) Transformation bestimmt, auf die Daten-Confiner anwendet und diesen Prozess iterativ wiederholt, wobei die so bestimmten Landmarken zur Erstellung eines "Point distribution model" verwendet werden können; oder

b) zusammengehörige Confiner wie folgt bestimmt werden: Für die Knoten, die nach einer Bifurkation im CT eines der Bilder auftreten, werden die Knoten/Confiner mit geringstem relPos-Wert im CT des anderen Bildes gesucht, dabei werden Punktoutlier wie in Anspruch 6) unterdrückt, danach wird für alle Confiner-Paare die relPos-Verteilung betrachtet, und es werden Confiner-outlier, wie in 6)(i) für Punktoutlier beschrieben vorübergehend eliminiert,

anschliessend wird eine Punktregistrierungsmethode unter Berücksichtigung zusammengehöriger Confiner angewandt,

durch eventuelles Verwenden zunächst stark gestutzter CTs und danach immer weniger stark gestutzter CTs kann in a) und b) ein grob-zu-fein-Effekt erzielt werden, der auch durch/mit folgende/n Verfahren ersetzt/kombiniert werden kann und die Bilder werden zunächst sehr stark (d.h. auf grossen Skalen) (z.B. Gauss-) geglättet (bzw. in sehr grober Pixelauflösung dargestellt), und im Verlauf des Verfahrens immer schwächer geglättet (bzw. in immer feinerer Auflösung dargestellt).

5) Verfahren nach Punkt 3, das die CTT wie in Punkt 4 einsetzt.

6) Verfahren nach Anspruch 3, das anstelle der Vorverarbeitung mittels CTT in einem Segmentierungsschritt Objekte im Bildraum identifiziert und deren Oberfläche und/oder Schwerpunkt berechnet, die Objekte treten an die Stelle der Confiner, werden nur (unzusammenhängende) Punkte an der Objektoberfläche identifiziert (z.B. mittels eines Canny edge detectors), so können nicht nach 3b) sich entsprechende confiner/Objekte vorbestimmt werden undfür die segmentierten Objekte können insbesondere auch individuelle Translation und Rotation oder Deformierungen bestimmt werden und die Objektbahnen individuell um ausgewählte Transformationstypen korrigiert werden.

7) Verfahren zur Registrierung von einer Datenpunkt(DP)menge auf eine Referenzpunkt(RP)menge, das iterativ für eine Reihe vorgegebener Transformationstypen, die immer mehr lokale Deformierungen zulassen, deren freie Parameter so bestimmt, dass ein Fehlerfunktionai minimiert wird, das die Positionen der transformierten DPe mit denjenigen der RPe vergleicht, dabei werden als Transformationstypen zunächst eine rigide (Rotation und Translation), dann eine affine Transformation gewählt und danach Transformationstypen, definiert durch eine Anzahl von Kontrollpunkten, die frei verschoben werden können (die freien Parameter der Transformation) und zwischen deren Verschiebungsvektoren mit thin-plate splines interpoliert wird (Bookstein 1989) und,die Anzahl der Kontrollpunkte wird iterativ erhöht (um immer mehr lokale Deformierungen zulassen), und die initiale Position der Kontrollpunkte wird der Form der DPe und/oder RPe oder deren relativer Lage angepasst,

insbesondere kann zur Bestimmung der initialen Position der Kontrollpunkte auf die DPmenge - wobei jeder Punkt in Abhängigkeit seiner Distanz zum nächstgelegenen RP gewichtet werden kann - ein Punkt-Clustering-Algorithmus angewandt werden und die Cluster-Schwerpunkte (oder jeweils der Punkt mit höchster Dichte innerhalb eines Clusters, etc.) könnenals die initiale Position gewählt werden,

insbesondere kann auch die Summe der quadratischen Abstände jedes DPs zum nächstgelegenen RP (diesem Term können die Abstände jedes Rps zum nächsten DP hinzuaddiert werden und/oder ein Regularisierungsterm der zu starke Biegung bestraft) als Fehlerfiunktional gewählt werden,

Outlier können auf mehrere Arten unterdrückt werden: (i) ausgehend von der Verteilung der Distanzen zwischen DPen und dem jeweils nächstgelegenen RP werden alle DPe/RPe mit grösserer Distanz als der Median oder Mittelwert+Standartabweichung der Verteilung eliminiert oder (ii) anstelle der quadratischen Distanzen wird eine andere Funktion der Distanz verwendet (z.B. Betragsfunktion oder siehe M-estimator in Press et al. 1992).

8) Verfahren nach Punkt 3, 4, und/oder 6, das zur Punktregistrierung das Verfahren aus Anspruch 7 verwendet wird.

9) Verfahren nach Punkt 1-3, 4, 5, 6, und/oder 8, das die in 1a) (oder entsprechend) bestimmte Transformation automatisch (auch partiell) mit idealisierten dynamischen Referenztypen vergleicht (zeitlich und räumlich) wie z.B. räumlich lineare Dynamik, Diffusionsdynamik, Hamiltonsche Dynamik, elastische/harmonische Schwingungen, etc., wobeidies mit den folgenden Schritten geschieht:

0Suche der bestpassenden Referenzdynamik und Bestimmung ihrer Parameter und des punktweisen und absoluten Fehlers zur Transformation,

1evt. alternativ zu 1b): farb-/musterkodierte Darstellung des (punktweisen) Fehlers an der Oberfiäche/im Bildvolumen.

10) Verfahren zur Partition des Raumes in Regionen unterschiedlicher, in sich homogener Bewegung, wobei für die einzelnen Regionen eine getrennte Bestimmung der dynamischen Parameter durchgeführt wird und dabei zunächst für die Punktemengen einer Reihe von Zeitschritten ein "Point distribution model" erstellt wird, für das die dominanten Hauptkomponenten der Bewegung ausgewählt werden, danach wird jeder Punkt des Raumes der Komponente zugeordnet, die an seiner Verschiebung während der betrachteten Zeitschritte den dominierenden Anteil hat, die verschiedenen Regionen werden durch verschiedene Farben dargestellt.

11) Verfahren zur stetigen numerischen Beschreibung der Bewegung mittels statistischer Techniken, wie Clustering und Histogramm Analyse, was den Vergleich von Bewegungen vereinfacht, Anwenden dieser Techniken auf die punktweise bestimmten lokalen Größen (z.B. auf die in 1b3) (i) ausgewählte Ebene), um Regionen zu kennzeichnen, in denen eine bestimmte Größe besonders intensiv vorkommt oder in denen gerade die Werte, die besonders oft angenommen werden, vertreten sind (clustering auf Basis des Histogramms).

12) Computerprogramm mit einer Programmcode-Einrichtung, um ein Verfahren nach einem der vorstehenden Punkte durchzuführen, wenn das Computerprogramm auf einem Computer ausgeführt wird.

13) Computerprogrammprodukt mit einer Programmcode-Einrichtung, die auf einem computerlesbaren Datenträger gespeichert ist, um ein Verfahren nach einem der Punkte 1-11 durchzuführen, wenn das Programmprodukt auf einem Computer ausgeführt wird.

14) Datenverarbeitungssystem, insbesondere zum Ausführen eines Verfahrens nach einem der Punkte 1-11.

BILDVORVERARBEITUNG; PUNKTEXTRAHIERUNG

In der Bildvorverarbeitung werden Strukturen des Bildraums als Bildpunkte extrahiert, In stark verrauschten Bildern wird hierbei zunächst das Rauschen beseitigt ohne wesentliche Strukturen des Bildes zu zerstören. Je nach Struktur der Bildobjekte wird dafür ein Reaktion-Diffusions-Operator (G.-H. Cottet, and L. Germain, Image processing through reaction combined with nonlinear diffusion, Math. Comp., 61 (1993), pp. 659-673, oder als diskretes Äquivalent: J. Mattes, D. Trystram and J. Demongeot, Parallel image processing using neural networks: applications in contrast enhancement of medical images, Parallel Processing Letters, 8: 63-76, 1998) oder ein Operator der anisotropen Diffusion mit einer Kantenstoppfunktion auf Grundlage der Tuckeynorm (M. J. Black NS D. Heeger, IEEE Trans. on Image Processing 7, 421 (1998)) angewandt, wodurch das Bild in homogene Regionen zerlegt wird. Andere Glättungsverfahren sind Gaußsche Glättung oder Wavelet basierte Verfahren.

Die bevorzugte Technik zur Strukturextraktion ist die Confinement-Tree-Technik (Mattes und Demongeot, Tree representation and implicit tree matching for a coarse to fine image matching algorithm MICCAI, 1999). Hierbei wird ein Grauwertbild als Baumstruktur repräsentiert. Jeder Knoten des Baumes entspricht hierbei einer Region (genannt confiner) des Bildes, die mittels eines gegebenen Grauwert-Niveau definiert wird (als eine der Zusammenhangskomponenten der Menge aller Bildpunkte mit höherem Grauwert). Die Verbindung zwischen Knoten ist durch die Teilmengen-Beziehung zwischen den Regionen festgelegt, wobei nur direkt aufeinanderfolgende Grauwert-Niveaus betrachtet werden. Nach Kriterien wie zu geringe Fläche, Grauwertmasse, etc. werden Knoten gelöscht (*Filtern* des Baums), u.a. da sie Rauschartefakte sein können aber auch, um die Anzahl der Punkte zu reduzieren. Als Punkte werden entweder die Schwerpunkte aller confiner extrahiert und/oder deren Konturpunkte. Um die Punktemenge zu reduzieren können auch nur die Schwerpunkte weiterverwendet werden, die Knoten zugeordnet sind, die sich direkt nach einer Gabelung im Baum befinden.

Alternativen bei der Punktextraktion, sind (i) die Anwendung eines Canny-Deriche-Kanten-Detektors (R. Deriche, Using Canny's criteria to derive a recursively implemented optimal edge detector, Int. J. Comput. Vision, 1987, 167-187) (ii) Extrahieren von Crest/ridge-lines (O. Monga, S. Benayoun, and O. Faugeras, From partial derivatives of 3D density images to ridge lines, IEEE, CVPR'92, 354-359, Champaign, Illinois, 1992) oder von (iii) Extremal- Punkten (J.-P. Thirion, New feature points based on geometric invariants for 3D image registration, Int. J. Comput. Vision, 18: 121-137, 1996, K. Rohr, On 3D differential operators of detecting point landmarks. Image and Vision Computing, 15: 219-233, 1997).

Es kann auch, falls dies vom Benutzer für die gewünschte Quantifizierung,

Visualisierung oder das Tracking für hilfreich erachtet wird, eine komplette Objektsegmentierung durchgeführt werden, bei der Objekte identifiziert werden und Konturpunkte dem Objekt zugeordnet sind. Dazu wird, wie im nächsten Abschnitt beschrieben, eine Ausgangsform, z.B. eine Kugel, mit den zuvor extrahierten Punkten registriert (in diesem Falle sind Punkte, die mit dem Canny-Deriche-Kanten-Detektor gefunden wurden zu bevorzugen). Für die Segmentierung von Objekten, die zu ihrer Umgebung einen deutlichen Kontrast aufweisen, genügt es einen confiner auszuwählen, der ein zusätzliches Kriterium erfüllt, wie z.B. einen maximalen Wert (durchschnittlicher Gauwert) / (Anzahl der Kontur (Grenzlinien)-Pixel) oder ( Fläche)/(Anzahl der Konturpixel)$^2$. Für die Segmentierung von kleinen Objekten in stark verrauschten Bildern verfahren wir wie Eils et al. und lassen einen Schritt der Kantenvervollständigung auf einen Schritt der Kantenextrahierung (siehe oben) folgen.

Schließlich ist eine Punktextrahierung unnötig, falls die Aufnahmevorrichtung bereits Punkte liefert. Dies ist z.B. bei Laserscannern der Fall. Der Benutzer hat im Anschluss an die Punktextrahierung die Möglichkeit, interaktiv Punkte zu löschen oder Regionen auszuwählen.

REGISTRIERUNG

Wir bezeichnen den Raum, indem sich die Bilder oder Punktmengen, oder- allgemeiner - räumliche Datenmengen befinden als *Bildraum.*
Zur Registrierung zweier Bilder (/räumlicher Datenmengen) *A* und *B* wird eine parametrisierte Transformation auf eines der Bilder (nämlich *A* in unserer Terminologie) angewandt. Die Parameter werden dann so bestimmt, dass das transformierte Bild möglichst genau dem anderen Bild gleicht und zudem eine realistische Verformung beschrieben wird, die die tatsächliche Verformung der Objekte des Bildraums möglichst gut beschreibt. Hierbei wird durch ein Funktional (*Fehlerfunktiorral*) beschrieben wie gut das eine Bild dem anderen gleicht. Das Funktional ist eine Funktion, die einer gegebenen Transformation einen Fehlerwert zuordnet, der umso kleiner ist, je genauer sich die Bilder gleichen. Durch einen Optimierungsalgorithmus werden die Parameter der Transformation so bestimmt, dass das Fehlerfunktional ein lokales Minimum annimmt.

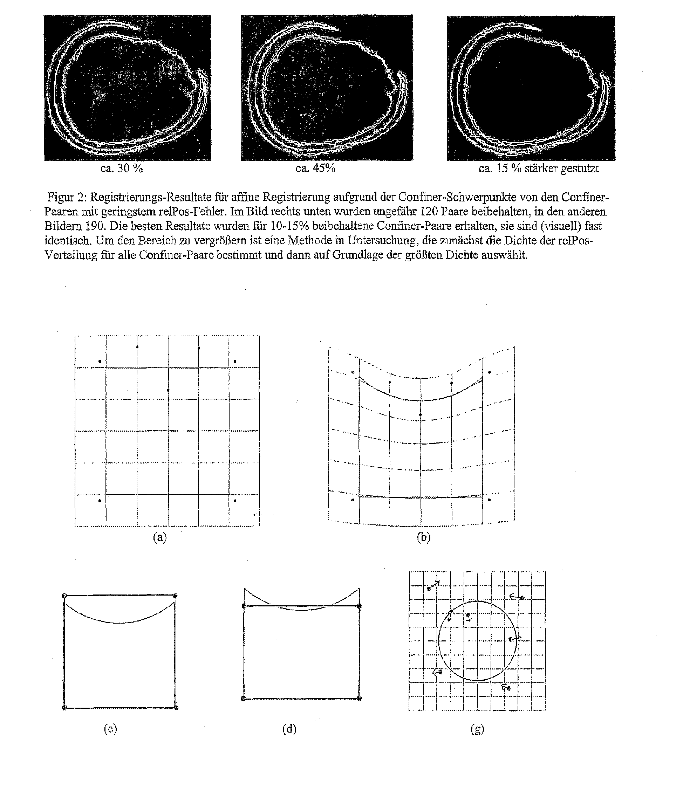

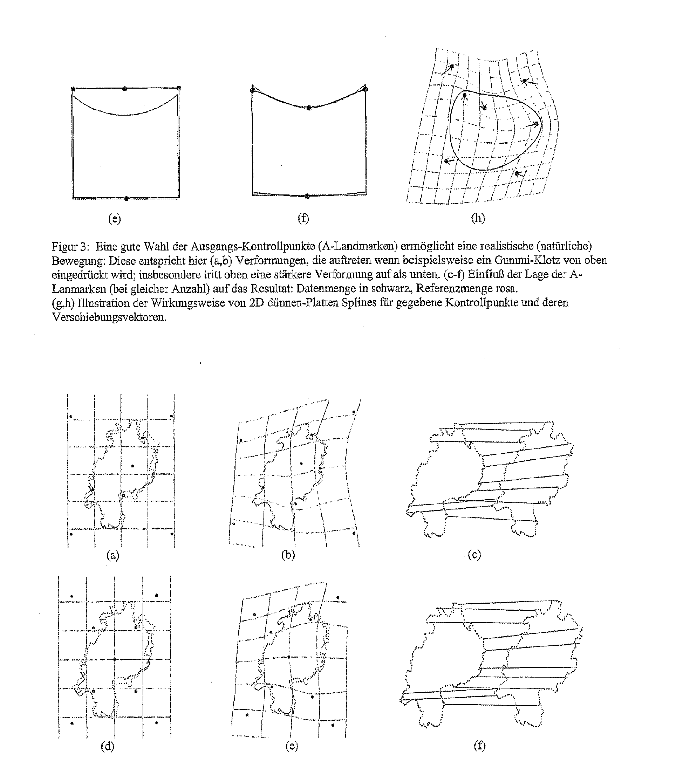

**Confiner Zuordnung, Bewertung und Auswahl.** Das Funktional basiert bevorzugt auf den in der Bildvorverarbeitung extrahierten Punkten. Wurden dabei in beiden Bildern Confiner-Konturen oder Confiner-Schwerpunkte berechnet, so werden gemäß J. Mattes und J. Demongeot (SPIE Medical Imaging 2001) für die Confiner in einem Bild die entsprechenden Confiner im anderen Bild gesucht, wobei man entweder jeweils den Confiner mit geringstem strukturellen Fehler wählt (s. ebenfalls Mattes und Demongeot 2001, dort wird der Wert des strukturellen Fehlers mit *relPos* bezeichnet), oder einfach den mit nächstgelegenem Schwerpunkt. Danach werden Paare mit zu geringer Übereinstimmung als Ausreißer (outlier) verworfen (um diese Übereinstimmung zu bestimmen wird wieder relPos gewählt, allerdings kann hier als Normalisierungsfaktor in relPos 1 gewählt werden; vor der Anwendung von relPos können die Confiner lokal affine gemacht werden). Auf Grundlage der verbleibenden Paare (z.B. ihrer Schwerpunkte oder Konturen) werden dann die Bilder überlagert. Dieser Prozess kann iterativ wiederholt werden, da aufgrund der Überlagerung für einen gegebenen Confiner eine bessere Wahl des ihm entsprechenden Confiners möglich wurde. In einer ersten Auswertung für eine iterative Anwendung des Verfahrens, erzielten wir bessere Resultate je weniger Confiner beim Stutzen gelöscht wurden (was dann allerdings auch zu einer erhöhten Rechenzeit führte) und für nur 15-20% beibehaltene Confiner-Paare (s. Figur 2) bei der Registrierung auf Grundlage der Confiner-Schwerpunkte.
Werden zur Registrierung die Confiner-Konturen herangezogen, so hat die individuelle Identifizierung der Confiner-Konturen den Vorteil, dass in den nachfolgenden Schritten für einen Konturpunkt nur noch der nächste Nachbar innerhalb der zugeordneten Confiner-Kontur gesucht werden muß. Diese Identifizierung muss jedoch für einen Teil der Confiner (schrittweise) erneuert werden, falls die nachstehend berechnete Transformation weitere Zuordnungen ermöglicht oder eine Korrektur bestehender Zuordnungen erfordert. Gemäß der Bewertung der Confiner-Paare mittels relPos (wobei der Normalisierungsfaktor in relPos hier auch gleich 1 gewählt werden kann) können die verschiedenen Confiner-Paare im Fehlerfunktional (s. auch unten) verschieden stark gewichtet werden.

**Fehlerfunktional.** Für die Definition des Fehlerfunktionals (oder Fehlermaßes) werden die Mengen der extrahierten Punkte aus *A* und *B* (diese Mengen werden ebenfalls mit *A* und *B* bezeichnet) unterschieden: Die Punkte der Menge *B* werden als Modellpunkte, die anderen als Datenpunkte $a_i$ ($1 \leq i \leq N$) bezeichnet. Wir definieren den *Transformations-Prototyp* T als eine Abbildung T: $R^3$ x $\Pi \rightarrow R^3$, die von einem Parametervektor $P \, \varepsilon \, \Pi$ abhängt ($\Pi$ ist der Parameterraum), und wir erhalten für jedes P eine Transformation T(*P*) des Raumes. Die euklidische Distanz eines Punktes x zum nächstgelegene Modellpunkt wird mit d(x, B) bezeichnet. Die aufsummierten quadratischen Distanzen stellen das provisorische Fehlerfunktional $C_{prov}$ dar:

$$C_{prov}(P) = (1/\sigma)\Sigma_{i=1...N} \, \sigma_I(d(T(P,a_i), B))^2.$$

Dabei ist $\sigma = \Sigma_{i=1...N} \, \sigma_i$. Die Gewichtungsfaktoren $\sigma_i$ ermöglichen es mit Ausreissern (outlier) umzugehen.

Der Wert von σ$_i$ hängt von der Verteilung aller Distanzen d$_j$ der transformierten Datenpunkte a$_j$ zu $B$ ab und ist 1, falls die d$_j$ kleiner als die durchschnittliche Distanz < d$_j$ > ist, für größere Werte nimmt dieser Wert wie eine Gauss-Funktion um < d$_j$ > ab. Die Standart-Abweichung dieser Gauss-Funktion ist als < $d_j$ >$^2$ / σ$_d$ gewählt, wobei σ$_d$ die Standart-Abweichung der Distanzen d$_j$ ist. Um eine wiederholte Überprüfung aller Modellpunkte zu vermeiden kann zuvor eine Distanzkarte bestimmt (Lavallée und Szeliski, IEEE Trans. PAMI, 1995) und in einem octree abgespeichert (wie auch zugehörige Gradienten der so definierten Abstandsfunktion, s. unten). Andere Möglichkeiten beruhen auf k-d-trees oder dem Voronoidiagramm. Auch ein symmetrischen Fehlermaß ist denkbar, bei dem nicht nur die Abstände jedes Datenpunktes zu der Modellmenge einfließt, sondern auch die Abstände jedes Modellpunktes zur Datenmenge. Die Verwendung eines symmetrischen Fehlermaßes führt in vielen Fällen zu besseren Ergebnissen, ist aber wegen seiner hohen Rechenkomplexität nicht immer zu bevorzugen.

Alternativ können sogenannte ikonische oder grauwertbasierte Fehlermaße benutzt werden (s. z.B. Roche, Malandaine, Ayache, Prima, MICCAI'99, LNCS Springer Verlag, 1999), die ohne Bildvorverarbeitung auskommen und die die Güte der Registrierung auf Grundlage eines Vergleichs der überlagerten Grauwerte für eine gegebene Transformation bestimmen. Dies ist dann sinnvoll und von Nutzen, wenn die Positionsänderung zwischen den einzelnen Bildern relativ klein ist und die anschließende Visualisierung und quantitative Analyse nicht auf extrahierten oder segmentierten Daten beruht.

**Bewegungsmodell und Optimierung** (Fieres et al. A point set registration algorithm using a motion model based on thin-plate splines and point clustering, in Pattern recognition, DAGM 2001, vol. 2191 of LNCS, 76-83, Springer-Verlag, 2001). Die Minimierung des oben beschriebenen Fehlerfunktionals allein ist jedoch noch kein Kriterium für eine gute Überlagerung. Z.B. minimiert die Transformation, die alle Datenpunkte auf einen bestimmten Modellpunkt abbildet, das (unsymmetrische) Funktional, ist aber nicht die gesuchte Lösung. Andere Beispiele sind leicht vorstellbar, in denen die reine Minimierung selbst des symmetrischen Fehlermaßes zu unerwünschten Lösungen führt.

Ziel ist es aber, eine Deformation zu errechnen, die einer natürlichen Verformung/Bewegung des Objekts/ der Substanz/ Materie möglichst nahe kommt. Zudem sollen sich - nach der Registrierung - physikalisch/anatomisch entsprechende Punkte der Daten- und der Modellmenge überlagern.

Erfindungsgemäß gibt es einige Methoden, den Lösungsraum auf realistische Lösungen zu beschränken. Eine Möglichkeit ist ein möglichst realistisches (räumliches) Bewegungsmodell zu wählen, das heisst einen geeigneten Transformations-Prototypen zu finden. Für die globale Transformation sind unsere bevorzugten Bewegungsmodelle die rigide und affine Transformation. Wie unten ausgeführt, beschreiben wir lokale Deformationen durch die Verschiebung von Kontrollpunkten von Volumen-Splines. Um die auf dem gesamten Raum definierte Transformation zu erhalten, werden die Kontrollpunkt-Verschiebungsvektoren mittels der Splines interpoliert. Wir verwenden bevorzugt dünne-Platten Splines ("splines à plaques minces", Duchon 1976, thin-plate splines, Bookstein 1989, s. Figur 3). Bei nicht-affinen Transformationen wird daher der Transformations-Prototyp bevorzugt durch die geeignete Ausgans-Position der Kontrollpunkte (im Ausgangsbild) bestimmt, durch die realistische (Volumen-) Transformation erzeugt werden können (s. Figur 3). Wir nennen diese Ausgangspositionen *A-Landmarken* **p**$_k$ (1 ≤ k ≤ n, wobei n die Anzahl der A-Landmarken ist) und bezeichnen den durch sie festgelegten Transformations-Prototyp mit **Tp**$_k$. Die Endpositionen **q**$_k$ der der Kontrollpunkte (im Zielbild) nennen wir *B-Landmarken*. Sie sind die freien Parameter der Transformation: P = (**q**$_1$,..., **q**$_n$). Wir haben also **Tp**$_k$((**q**$_1$, ..., **q**$_n$), **p**$_i$) = **q**$_i$. und

**Tp**$_k$(**q**$_1$,..., **q**$_n$) : R$^3$→ R$^3$, **x** → **Tp**$_k$((**q**$_1$,..., **q**$_n$), **x**). **Tp**$_k$((**q**$_1$, ..., **q**$_n$), **x**) kann als geschlossener Term dargestellt werden, analytisch ableitbar nach $P$ = (**q**$_1$,..., **q**$_n$), der in Bookstein (1989) angegeben wird. Das ermöglicht C$_{prov}$ und auch C (s. nächster Absatz) nach P abzuleiten, was für die Optimierung sehr wichtig ist.

Das Bewegungsmodell wird zusätzlich durch die *Regularisierung*-Technik mitbestimmt, die einen zusätzlichen Term im Fehlerfunktional einführt, der die Minimierung der Biegung erzwingt. Der hier verwendete Term U$_{bend}$ = U$_{bend}$ ($P$) ist das Integral der Summe aller quadratischen zweiten Ableitungen (nach den Raumkoordinaten **x**) der Transformation T**p**$_k$($P$, **x**), integriert über den Raum R$^3$ (s. Bookstein 1989). Damit erhalten wir das Fehlerfunktional

$$C = C_{prov} + \alpha U_{bend} \, .$$

Als zweite Möglichkeit wird eine *Grob-zu-Fein-Strategie* angewandt, wobei die Anzahl der freien Parameter der Transformation und somit auch die Genauigkeit der Überlagerung schrittweise erhöht wird (s. unten). Diese Strategie führt zur Vermeidung unerwünschter Minima, da der verwendete Optimierungsalgorithmus nach Lösungen in der Nähe der Initialisierungswerte sucht.

Bei der erfindungsgemäßen Optimierung des bevorzugten (quadratischen) Fehlerfunktionals ist Parametervektor $P^*$ zu bestimmen, der C($P^*$) = min$_{p\varepsilon\Pi}$ C($P$) erfüllt. Bevorzugt werden dabei die Parameter der Transformation mittels des Levenberg-Marquardt Algorithmus bestimmt. Der hier benötigte Gradient des Fehlerfunktionals nach $P$ = (**q**$_1$,..., **q**$_n$) lässt sich auf Grund der einfachen algebraischen Darstellung von **Tp**$_k$((**q**$_1$,.... **q**$_n$), **x**) (s. oben) leicht berechnen. Dies gilt sowohl für die globale als auch für die lokale Registrierung.

Für andere Funktionale können andere Optimierungsstrategien sinnvoller sein. Als solche sind zu nennen: der downhill Simplex Algorithmus, Simulated Annealing, und andere (Press et al. Numerical Recipes in C, 1992).

Für rigide und affine Registrierung kann die Optimierung auch durch den ICP Algorithmus durchgeführt werden (Besl und McKay, IEEE Trans. PAMI, 1992).

Der Ablauf der Registrierung umfasst drei Schritte (Grob-zu-Fein), wobei der dritte noch schrittweise verfeinert wird. Von Schritt zu Schritt wächst die Anzahl der freien Parameter der zu bestimmenden Transformation, und somit die Genauigkeit der Überlagerung. Zunächst wird eine rigide Registrierung vorgenommen, bei der die Parameter für Rotation und Translation bestimmt werden. Im zweiten Schritt wird affinlinear registriert, im dritten Schritt werden auch lokale Deformationen zugelassen. Erfindungsgemäß wird diese dritte Transformation auf den oben beschriebenen Prototyp eingeschränkt, der durch die A-Landmarken bestimmt ist.

Prinzipiell können die A-Landmarken überall positioniert werden. Erfindungsgemäß werden sie automatisch gesetzt und deren Anzahl schrittweise vergrößert: Zunächst wird die beste Überlagerung für eine relativ geringe Anzahl von Kontrollpunkten bestimmt (8 in den unten beschriebenen 3D Beispielen, 4 in den 2D Beispielen), resultierend in der noch relativ globalen Transformation $T^{(1)} = T\mathbf{p}_k^{(1)}(P_1)$ (definitionsgemäß ist $T^{(0)}$ die Identität). Nach Einfügen zusätzlicher Kontrollpunkte (wobei die neuen Verschiebungsvektoren (d.h. B-Landmarken) gemäß $T^{(1)}$ initialisiert werden), erhält man die nächst lokalere Transformation $T^{(2)}$, usw., bis der gewünschte Grad an Lokalität erreicht ist.

Die automatische Positionierung der A-Landmarken kann z.B. durch eine Octree-Repräsentation der Datenpunkte erfolgen, wobei jeder Würfel des Octrees einen Kontrollpunkt in der Mitte enthält. Durch Variation der Tiefe des Octrees ist eine schrittweise Verfeinerung der Transformation leicht möglich.

Die erfindungsgemäße (bevorzugte) automatische Bestimmung der A-Landmarken besteht jedoch darin, jeden Punkt $a_j$ der Datenpunktmenge mit seinem Abstand zum nächstgelegenen Punkt der Modellmenge (oder mit der 3. Potenz dieses Abstand oder mit einer anderen monotonen Funktion des Abstands) zu gewichten und auf die so gewichtete Punktmenge das k-means-Cluster-Verfahren anzuwenden (Fromel unten, Fieres et al. 2001). Die Anzahl der Cluster kann frei gewählt werden. Sie wird gemäß dem Grob-zu-Fein-Prinzip schrittweise erhöht. Für eine gegebene Feinheitsstufe v der Transformation, definieren wir also in jedem Schritt des k-mean Verfahrens die Cluster-Schwerpunkte $CS_i$:

$$CS_i = \left( \sum_{j \in I_i} a_j \, d(T^{(v)}(a_j), B)^3 \right) / \left( \sum_{I \in I_i} d(T^{(v)}(a_j), B)^3 \right),$$

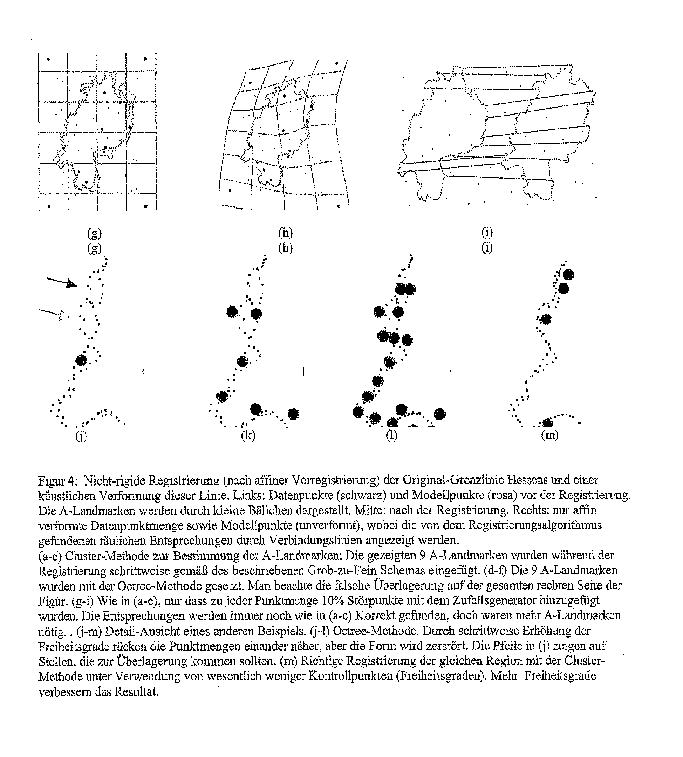

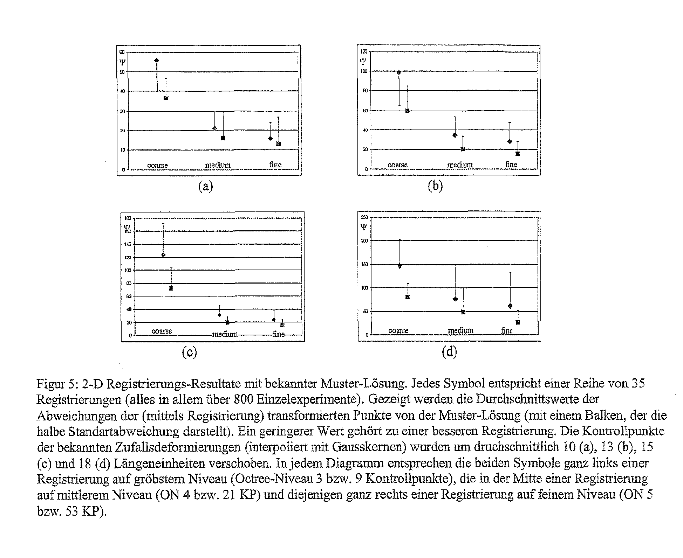

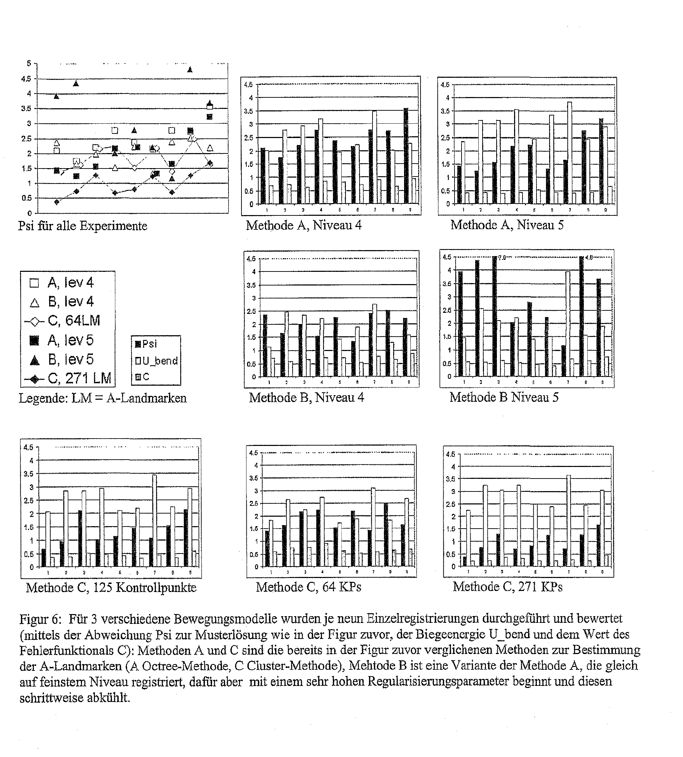

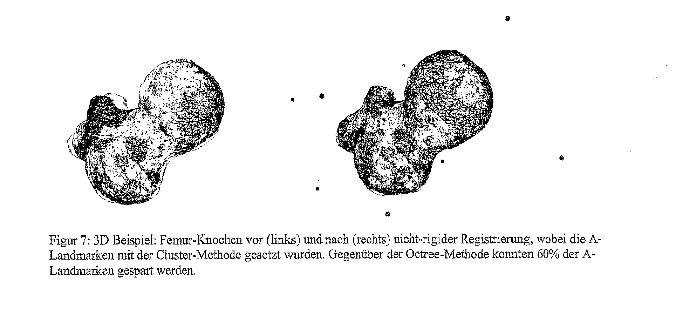

wobei $I_i$ die Menge der Indizes der Datenpunkte ist, die dem iten Cluster-Zentrum am nächsten liegen. Die Cluster-Schwerpunkte $CS_i$, die wir nach Konvergenz des Verfahrens erhalten, werden als Kontrollpunkte verwendet. Sie liegen in Regionen mit noch großer Entfernung zwischen Daten- und Modellpunkten. Beim Start des Verfahrens werden die 8 Eckpunkte der bounding box um die Datenpunktmenge verwendet. Bei unseren Auswertungen haben wir die Zahl der Kontrollpunkte schrittweise um 1 + 3v erhöht. Beide Verfahren zum setzten der Kontrollpunkte werden in den Figuren 4-7 verglichen.

Zur Repräsentation der nicht-rigiden Transformation sind auch andere Methoden denkbar, z.B. der Octree-Spline von Szeliski und Lavallee (1994).

Erfindungsgemäß wird im dritten Registrierungsschritt - wie oben beschrieben - eine schwache Regularisierung vorgenommen, d.h. es wird ein Term zum Fehlerfunktional addiert, der Biegung bestraft. Es lässt sich zeigen, dass sowohl die Unterbindung übermäßiger Biegung als auch das Grob-zu-fein-Vorgehen die Qualität der Überlagerung meist erheblich verbessert (z.B. die korrekte Zuordnung logisch korrespondierender Punkte). Ohne diese Verfahrensschritte werden lokale Formmerkmale zerstört.

**Referenzdynamik.** Es lassen sich Referenzdynamiken auswählen, die entweder an die gefundene Bewegung (Transformation) gefittet werden können, oder die, falls die Referenzdynamik als parametrisierte Transformation darstellbar ist, sich direkt an die Daten fitten lässt. Als Referenzdynamiken kommen z.B. in Frage: lineare Dynamik (affine Transformation, mit beliebiger Zeitabhängigkeit), Diffusionsdynamik, Hamiltonsche Dynamik (z.B. Hydrodynamik), elastische (harmonische) Schwingungen. Diese Dynamiken können auch kombiniert werden, gleichzeitig und nacheinander.

**Transformation über mehrere Zeitschritte hinweg.** Die Transformation (ebenso wie die Referenzdynamik) wird erfindungsgemäß auch zwischen mehreren Zeitschritten $t_{n-i}$ bis $t_n$ bis $t_{n+k}$ bestimmt. Um eine Aufsummierung von Fehlern zu vermeiden, die bei einer bloßen Verkettung der Transformationen zwischen je zwei Zeitschritten entstehen würde, wählen wir folgende Verfahrensweise: Soll von $t_n$ ausgehend die Transformation nach $t_{n+k}$ berechnet werden, gehen wir wie für $t_n$, $t_{n+1}$, $t_{n+2}$, $t_{n+3}$ beschrieben vor. Durch Registrierung berechnen wir die Transformationen $T_{n1}$, $T_{n2*}$, $T_{n3*}$, die die Bilder $t_n$ mit Bild $t_n+_1$, $t_n+_1$ mit $t_n+_2$ und $tan+2$ mit $t_{n+3}$ registrieren. Wir transformieren Bild $t_n$ (oder die entsprechende extrahierte Punktmenge) mittels $T_{n2*}oT_{n1}$ ($T_{n2*}$ und $T_{n1}$ verkettet), und registrieren zur Korrektur das resultierende Bild nochmals mit dem Bild aus $t_{n+2}$. Das liefert die Transformation $T_{n2}$ zwischen Bild $t_n$ und Bild $t_{n+2}$. Danach transformieren wir Bild $t_n$ mittels $T_{n3*}oT_{n2}$ und registrieren zur Korrektur das resultierende Bild nochmals mit dem Bild aus $t_{n+3}$. Das liefert $T_{n3}$. Wir verfahren entsprechend für die Transformation von $t_n$ nach $t_{n-i}$, indem wir das für $t_n$, $t_{n+1}$, $t_{n+2}$, $t_{n+3}$

beschriebene Verfahren auf $t_n$, $t_{n-1}$, $t_{n-2}$, $t_{n-3}$ anwenden. Erscheinen in einem Bild, z.B. in $t_{n+2}$, neue Strukturen (evt. gegeben als weitere Punkte), so werden in einem weiteren, vorgeschalteten Korrekturschritt diese, transformiert um $T_{n3*}$, dem mittels $T_{n3*}oT_{n2}$ transformierten Bild hinzuaddiert vor der Korrekturregistrierung mit Bild $t_{n+3}$. Alternativ kann, z.B. um zu $T_{n2}$ erhalten, auch Bild $t_n$ mittels $T_{n1}$ transformiert werden und das so erhaltene Bild (nach Korrektur um neue Strukturen) mit $t_{n+2}$ registriert werden. Und so weiter.

Für eine (eventuell nur global) bewegungskorrigierte Wiedergabe der Objekte/Bilder aus den Zeitschritten $t_n$ bis $t_{n+k}$ ist ein zeitlich absoluter Bezugspunkt nötig. Wählen wir als solchen Zeitschritt $t_n$ aus, so ist, um alle Bilder auf $t_n$ abzubilden, eine Möglichkeit, jeweils die Inverse (zunächst der Transformation zwischen $t_n$ und $t_{n+1}$) zu berechnen. Um die Berechnung dieser Inversen (zumindest im nicht rigiden und nicht affinen Fall) zu vermeiden, ist es i.a. am einfachsten die Punkte von $t_{n+1}$ auf diejenigen von $t_n$ zu registrieren. Kombiniert mit dem oben beschriebenen Verfahren kann auch dies zwischen je zwei beliebigen Zeitschritten durchgeführt werden.

Um dies in Echtzeit durchzuführen, d.h. gleichzeitig mit der Aufnahme der Bilder, sollte für jedes neue Bild nur zweimal registriert werden. Daher verfahren wir mit den beiden Korrekturschritten wie oben, wobei wir aber zunächst die Transformation zwischen $t_{n+1}$ und $t_n$ berechnen, dann zwischen $t_{n+2}$ und $t_n$ (unter Verwendung der ersten Transformation), etc.

Wird diese Vorgehensweise im Fall einer direkten Registrierung der Grauwertbilder ohne vorherige Punktextrahierung Angewandt, so werden die Grauwerte transformiert, wobei eine Interpolation zum Resampling für die Wiedergabe auf einem regelmäßigen diskreten Raster (Diskretisierung) verwendet wird.

**Regionen homogener Bewegung.** Für die wie oben beschrieben registrierten Punktemengen der Zeitschritte $t_n$ bis $t_{n+k}$ wird nun das bereits im Teil "Beschreibung" dargelegte "Point Distribution Model" erstellt. Dabei werden die Hauptkomponenten ausgewählt, die mehr als a% der Form Variation repräsentieren. Typische Werte sind a = 95 oder a = 90. Einen gegebenen Punkt auf der Oberfläche/im Raum ordnen wir dann der Hauptkomponente zu, die zur gößten Distanz d zwischen dem durch Auslenkung (aus dem Durchschnittsmodell) in Richtung Hauptkomponente um die positive Standartabweichung verschobenen Punkt und dem um die negative Standartabweichung verschobenen Punkt führt. Oder die alternativ zum größten Wert d/b führt, wobei b der zur jeweiligen Hauptkomponente gehörende Eigenwert ist. Die Punkte jeder Region dieser Unterteilung, können dann getrennt mit der oben beschriebenen Auslenkung affin registriert werden, um jeder Teilregion quantitative Bewegungsparameter zuordnen zu können.

**Objektbestimmung.** Stellen die bei der Bildvorverarbeitung extrahierten Punkte verschiedene Objekte dar, die als solche identifiziert sind, so können diese nach der Registrierung des Bildraums noch individuell getrackt oder sogar registriert werden. Hierbei ist zunächst eine Identifizierung der jeweils gleichen (oder entsprechenden) Objekte auf den verschiedenen Bilder nötig. Anders als in Eils et al.(1998/9) ist dafür nur noch die Anwendung eines strukturellen Ähnlichkeitsmaß nötig (Mattes und Demongeot, SPIE Medical Imaging 2001), da die Registrierung die einzelnen Objekte schon aufeinander zubewegt hat. Die anschließende individuelle Registrierung ist z.B. bei Zellbildern interessant, wo man sich auch für Drehungen und Dehnungen der individuellen Zelle interessiert.

VISUALISIERUNG UND QUANTIFIZIERUNG

Die Berechnung der Grauwertbildfolge, die alle Grauwertbilder der Folge korrigiert um die Bewegung der Referenzdynamik ausgibt (oder auch korrigiert um die gesamte registrierte Bewegung), ist eine erste Visualisierungs-Anwendung. Hierbei umgeht man schrittweise wie oben beschrieben eine explizite Berechnung der Inversen (s. Teil Registrierung).

Die solchermaßen neuberechnete Bildfolge kann anschließend animiert und als Video dargestellt werden. Aber auch alle anderen Methoden der Bildfolgenanalyse und Visualisierung können darauf angewandt werden. Insbesondere verwenden wir diese korrigierte Bildfolge, falls die bewegungskorrigierten Bahnen von individuellen Objekten visualisiert werden sollen, die wie im Teil Registrierung beschrieben verfolgt wurden.

Die Erfindung umfasst mehrere Quantifizierungs- und Visualisierungsmodule, die als die unten aufgezählten Punkte einzeln oder kombiniert verwendet werden können. Erfindungsgemäß sollen sowohl die Bewegung der Objekt-/Bildpunkte visualisiert werden, als auch gewonnene quantitative Werte und diese insbesondere in Bezug auf den Bildraum.

Dies erfolgt durch eine Farbkodierung der Punkte im Bildraum und/oder durch verschiedene Muster, die verschiedene Werte quantifizierter Parameter darstellen (durch ein immer dichter werdendes Muster wird ein kontinuierlicher Parameter repräsentiert).

Quantifizierungs -und Visualisierungsmodule:

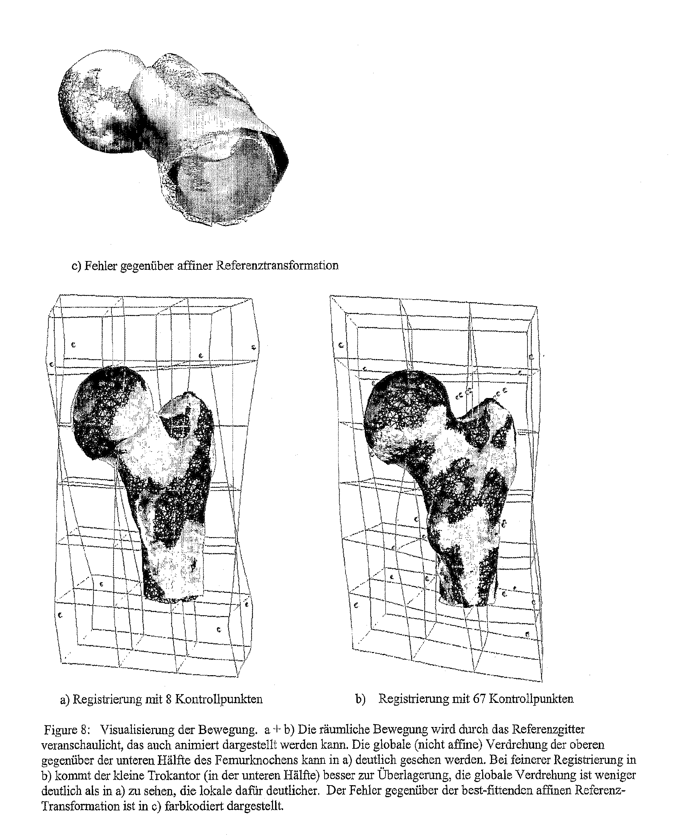

1) Segmentierte Objekte oder ausgewählte Confiner im Ausgangsbildraum werden als geschlossene aber transparente, 3D gerenderte (surface rendering) Oberflächen visualisiert, im Zielbildraum als Triangulationsgitter (das mit der berechneten Transformation transformiert wurde). Beide werden sowohl vor als auch nach der Registrierung überlagert (und verschiedenfarbig) dargestellt (s. Figur 8). Auch die nur extrahierten Punktmengen können so dargestellt werden. Anhand der gefundenen Transformation werden mittels einer Unterteilung des Parameterintervalls (der Transformationsparameter) Zwischenschritte interpoliert, die interpolierten Transformationen werden auf das Ausgangsobjekt angewandt, dessen Bewegung dann animiert dargestellt werden kann.

2) Die interaktive Confinerauswahl (mit anschliessender Visualisierung) erfolgt entweder durch anklicken eines Knotens im Confinement-Tree oder durch Vorgabe eines Grauwertniveaus und das Anklicken eines Punktes im Bild, womit der Confiner auf dem gegebenen Niveau spezifiziert wird, der den Punkt enthält (oder eventuell kein Confiner). Ohne Vorgabe des Grauwertniveaus wird der kleinste Confiner im gefilterten Baum bestimmt, der den Punkt enthält. Die visualisierten Oberflächen können dann auch mit dem Zielgrauwertbild überlagert dargestellt werden.Um das Zielgrauwertbild nicht zu verdecken, können die Teile der Oberflächen oberhalb der betrachteten Ebene im Zielgrauwertbild (s. auch 4c)) weggeschnitten werden. Die überlagerte Darstellung ermöglicht auch eine visuelle Kontrolle wie gut registriert wurde.

3) Die Deformation wird durch ein in 3D gerendertes (surface rendering) Referenzgitter dargestellt. Dieses kann animiert dargestellt werden und mit den Oberflächen oder einem der Grauwertbilder überlagert (Figur 8). Für verschieden Farbkanäle werden die Referenzgitter (und evt. auch die extrahierten Punkte) verschiedenfarbig überlagert dargestellt.

4) Die farbkodierte/musterkodierte (einschließlich grauwertkodiert) Darstellung quantifizierter Werte, die für jeden Punkt im Bildraum berechnet wurden, geschieht auf folgende Weise:

    a) Objekte werden segmentiert oder Confiner werden ausgewählt; dann werden die 3D gerenderten Oberflächenpunkte farbkodiert/musterkodiert.

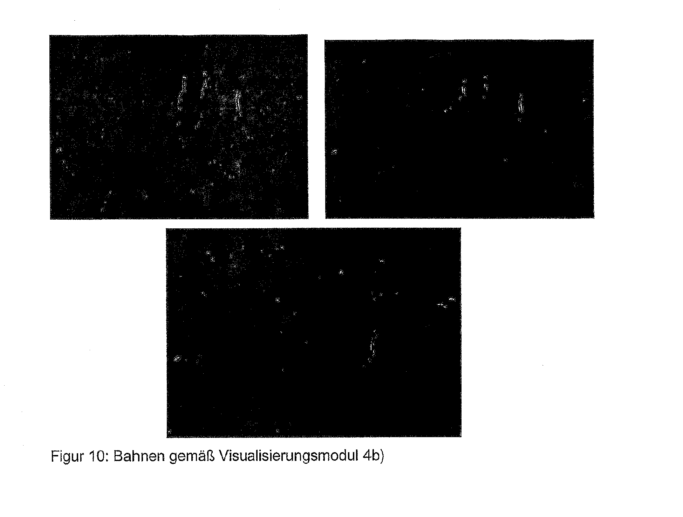

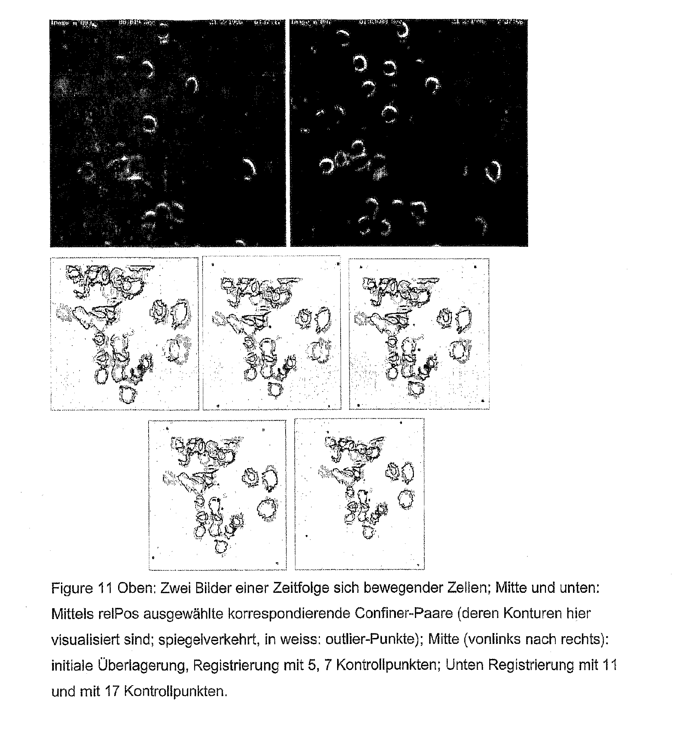

    b) Es werden entweder charakteristische Punkte anhand der Ausganspunktmenge bestimmt (s. Teil Bildvorverarbeitung/Punktextrahierung und Mattes und Demongeot, SPIE Medical Imaging 2001 für den gesamten Bildraum und Brett und Taylor, Image and Vision Computing 18:739-748, 2000 für Punkte auf der Oberfläche) oder regelmäßig Punkte ausgewählt oder der Benutzer klickt auf mindestens einen Punkt im Raum oder auf einer segmentierten/Confiner-Oberfläche. Für diese/diesen wird dann die Bahn mit (Fehler-) Farb(/Muster-) kodierung angezeigt (s. Figur 10).

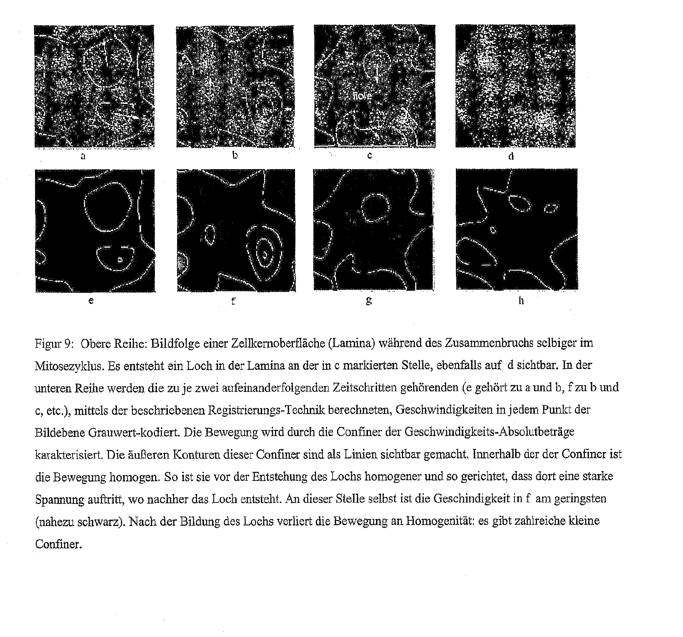

    c) Alle Punkte in einer vom Benutzer interaktiv bestimmten Ebene durch das Raumvolumen werden farb-/musterkodiert dargestellt. Bei 2D Bildern ist dies der gesamte Bildraum. Die Figur 9zeigt ein Beispiel für die grauwertkodierte Größe Geschwindigkeit.

    d) Es werden in a) - c) folgende Größen auf diese Art und Weise dargestellt:

        i) Fehler zur Referenzdynamik (für extrahierte Punkte), als euklidischer Abstand zwischen Punkt transformiert mit Referenzdynamik und nächstgelegenem Punkt im Zielraum (oder zum ursprünglich gleichen Punkt transformiert mit mittels Registrierung berechneter Bewegung);

        ii) normierte lokale Biegung (Bookstein, Principal Warps: Thin-plafie splines and the decomposition of deformations, IEEE Trans. PAMI 11: 567-585, 1995, siehe auch Duchon, Interpolation des fonctions de deux variables suivant le principe de la flexion des plaques minces, RAIRO Analyse Numérique, 10: 5-12,1976) integriert über eine Kugel von vorgegebenem Radius um einen gegebenen Punkt im Bildraum;

        iii) ii) für jeden principal warp (Bookstein, IEEE Trans. PAMI, 1995) und/oder für verschiedene Tiefen des Kontrollpunkt-octrees;

        iv) Geschwindigkeit, Beschleunigung.

5) Visualisierung der Bahnen getrackter Objekte/Confiner (farbkodiert).

6) Visualisierung der (mittels Registrierung bestimmten) Bahnen von Oberflächenpunkten, die (im Ausgangsbild) entweder interaktiv oder regelmäßig verteilt oder als charakteristische Punkte (automatisch berechnet wie in Punkt 4 b)) definiert werden.

7) Interaktives Löschen von Punkten (z.B. in einer bounding box) oder Oberflächen oder visualisierten Bahnen.

8) Farbkodierung der Partitionierung, die gemäß dem Abschnitt Registrierung jedem Punkt im Raum eine Bewegungshauptkomponente zuordnet (womit man Regionen mit einheitlichem Bewegungstyp erhält) und jeder Bewegungshauptkomponente eine Farbe.

9) Visualisierung der Bewegung gemäß 1) für jede Hauptkomponente, für jeden principal warp, und/oder für verschiedene Tiefen des Kontrollpunkt-octrees.

10) Interpolation für Animationen und Bahnen wie in 1) beschrieben.

11)Quantifizierung globaler Parameter, wie globale Biegung (insbesondere für jeden principal warp, aber auch für verschiedene Tiefen des Kontrollpunkt-octrees), globaler Fehler zur Referenzdynamik (insbesondere für jede Hauptkomponente), Parameter der Referenzdynamik, sowohl für aufeinanderfolgende Schritte als auch, wie in Registrierung besprochen, über mehrere Zeitschritte hinweg und beide Werte in Relation gesetzt.

12)Lokale Parameter, wie Geschwindigkeit oder Beschleunigung, können mit klassischen statistischen Methoden weiteranalysiert werden, wie z.B. Histogrammanalyse (Anzahl der Pixel für jeden Wert des lokalen Parameters) oder (dichte-basierte) Clusteranalyse. Dabei kann die Confinement-Tree-Analyse z.B. auf die in 4c) bestimmte grauwertkodierte Ebene angewendet werden. Dies ist in Figur 9 dargestellt und gestattet eine abstrahierte Beschreibung der Bewegung, die sich für einen Vergleich von Bewegungen eignet.
Die Homogenität der Bewegungsrichtung ist durch die Größe der Cluster gekennzeichnet.
Mittels des Histogramms können Wertebereiche der lokalen Parameter identifiziert werden (z.B. als 1D confiner), deren Werte besonders häufig im Bildraum vertreten sind. Die zugehörigen Pixel können im Bild/auf der Oberfläche gekennzeichnet werden (z.B. als Farbregionen).

BEISPIELE

Beispiele für Anwendungen der Visualisierung und der Verfahren zur quantitativen Analyse sind: Globale Mikroskop- oder Zellkernbewegung kompensieren (s. Figur 1),

**Patentansprüche**

1. Verfahren zur Registrierung mittels CTT, das entweder

   a) Confiner-Schwerpunkte (CS) oder -Dichtemaxima (CD) als kritische Punkte zur Registrierung verwendet und unter Anwendung der Methodik der strukturellen outlier Bestimmung (mittels relPos, s. Mattes und Demongeot 2001) ausgehend von einer initialen Überlagerung (evt. verbessert durch direkte Anwendung einer Punktregistrierungsmethode, s. 6)) zunächst sich entsprechende confiner-Paare bestimmt und dabei nur die Paare mit bestem relpos beibehält (evt. Gemäß 6(i)), auf Grund dieser (deren CD, CS, oder Confiner-Konturen) die best fittende (im Sinne des Fehlerfunktinals s. 6) sowie Fieres et al. 2001) Transformation bestimmt, auf die Daten-Confiner anwendet und diesen Prozess iterativ wiederholt, wobei die so bestimmten Landmarken zur Erstellung eines "Point distribution model" verwendet werden können;
   oder
   b) zusammengehörige Confiner wie folgt bestimmt werden: Für die Knoten, die nach einer Bifurkation im CT eines der Bilder auftreten, werden die Knoten/Confiner mit geringstem relPos-Wert im CT des anderen Bildes gesucht, dabei werden Punktoutlier wie in Anspruch 6) unterdrückt, danach wird für alle Confiner-Paare die relPos-Verteilung betrachtet, und es werden Confiner-outiier, wie in 6)(i) für Punktoutlier beschrieben vorübergehend eliminiert,
   anschliessend wird eine Punktregistrierungsmethode unter Berücksichtigung zusammengehöriger Confiner angewandt,

   durch eventuelles Verwenden zunächst stark gestutzter CTs und danach immer weniger stark gestutzter CTs kann in a) und b) ein grob-zu-fein-Effekt erzielt werden, der auch durch/mit foigende/n Verfahren ersetzt/kombiniert werden kann und die Bilder werden zunächst sehr stark (d.h. auf grossen Skalen) (z.B. Gauss-) geglättet (bzw. in sehr grober Pixelauflösung dargestellt), und im Verlauf des Verfahrens immer schwächer geglättet (bzw. in immer feinerer Auflösung dargestellt).

2. Verfahren nach Anspruch 1, das anstelle der Vorverarbeitung mittels CTT in einem Segmentierungsschritt Objekte im Bildraum identifiziert und deren Oberfläche und/oder Schwerpunkt berechnet, die Objekte treten an die Stelle der Confiner, werden nur (unzusammenhängende) Punkte an der Objektoberfläche identifiziert (z.B. mittels eines Canny edge detectors), so können nicht nach 3b) sich entsprechende confiner/Objekte vorbestimmt werden undfür die segmentierten Objekte können insbesondere auch individuelle Translation und Rotation oder Deformierungen bestimmt werden und die Objektbahnen individuell um ausgewählte Transformationstypen korrigiert werden.

3. Verfahren zur Registrierung von einer Datenpunkt(DP)menge auf eine Referenzpunkt(RP)menge, das iterativ für eine Reihe vorgegebener Transformationstypen, die immer mehr lokale Deformierungen zulassen, deren freie Parameter so bestimmt, dass ein Fehlerfunktional minimiert wird, das die Positionen der transformierten DPe mit denjenigen der RPe vergleicht, dabei werden ais Transformationstypen zunächst eine rigide (Rotation und Translation), dann eine affine Transformation gewählt und danach Transformationstypen, definiert durch eine (Anzahl von Kontrollpunkten, die frei verschoben werden können (die freien Parameter der Transformation) und zwischen deren Verschiebungsvektoren mit thin-plate spiines interpoliert wird (Bookstein 1989) und,die Anzahl der Kontrollpunkte wird iterativ erhöht (um immer mehr lokale Deformierungen zulassen), und die initiale Position der Kontrollpunkte wird der Form der DPe und/oder RPe oder deren relativer Lage angepasst,
insbesondere kann zur Bestimmung der initialen Position der Kontrollpunkte auf die DPmenge - wobei jeder Punkt in Abhängigkeit seiner Distanz zum nächstgelegenen RP gewichtet werden kann - ein Punkt-Clustering-Algorthmus angewandt werden und die Cluster-Schwerpunkte (oder jeweils der Punkt mit höchster Dichte innerhalb eines Clusters, etc.) könnenals die initiale Position gewählt werden,

insbesondere kann auch die Summe der quadratischen Abstände jedes DPs zum nächstgelegenen RP (diesem Term können die Abstände jedes Rps zum nächsten DP hinzuaddiert werden und/oder ein Regularisierungsterm der zu starke Biegung bestraft) als Fehlerfunktional gewählt werden,

Outlier können auf mehrere Arten unterdrückt werden: (i) ausgehend von der Verteilung der Distanzen zwischen DPen und dem jeweils nächstgelegenen RP werden alle DPe/RPe mit grösserer Distanz als der Median oder Mitielwert+Standartabweichung der Verteilung eliminiert oder (ii) anstelle der quadratischen Distanzen wird eine andere Funktion der Distanz verwendet (z.B. Betragsfunktion oder siehe M-estimator in Press et al. 1992).

4. Verfahren nach Anspruch 1, 2, und/oder 3 das zur Punktregistrierung das Verfahren aus Anspruch 3 verwendet wird.

5. Verfahren nach Anspruch 1-3, und/oder 4, das die in 1a) (oder entsprechend) bestimmte Transformation automatisch (auch partiell) mit idealisierten dynamischen Referenztypen vergleicht (zeitlich und räumlich) wie z.B. räumlich lineare Dynamik, Diffusionsdynamik, Hamiltonsche Dynamik, etastische/harmonische Schwingungen, etc., wobei dies mit den folgenden Schritten geschieht:

   0Suche der bestpassenden Referenzdynamik und Bestimmung ihrer Parameter und des punktweisen und absoluten Fehlers zur Transformation,
   1evt. alternativ zu 1b): farb-/musterkodierte Darstellung des (punktweisen) Fehlers an der Oberfläche/im Bildvolumen.

6. Verfahren zur Partition des Raumes in Regionen unterschiedlicher, in sich homogener Bewegung, wobei für die einzelnen Regionen eine getrennte Bestimmung der dynamischen Parameter durchgeführt wird und dabei zunächst für die Punktemengen einer Reihe von Zeitschritten ein "Point distribution model" erstellt wird, für das die dominanten Hauptkomponenten der Bewegung ausgewählt werden, danach wird jeder Punkt des Raumes der Komponente zugeordnet, die an seiner Verschiebung während der betrachteten Zeitschritte den dominierenden Anteil hat, die verschiedenen Regionen werden durch verschiedene Farben dargestellt,

7. Verfahren zur stetigen numerischen Beschreibung der Bewegung mittels statistischer Techniken, wie Clustering und Histogramm Analyse, was den Vergleich von Bewegungen vereinfacht, Anwenden dieser Techniken auf die punktweise bestimmten lokalen Größen (z.B. auf die in 1b3) (i) ausgewählte Ebene), um Regionen zu kennzeichnen, in denen eine bestimmte Größe besonders intensiv vorkommt oder in denen gerade die Werte, die besonders oft angenommen werden, vertreten sind (clustering auf Basis des Histogramms).

8. Computerprogramm mit einer Programmcode-Einrichtung, um ein Verfahren nach einem der vorstehenden Ansprüche durchzuführen, wenn das Computerprogramm auf einem Computer ausgeführt wird.

9. Computerprogrammprodukt mit einer Programmcode-Einrichtung, die auf einem computerlesbaren Datenträger gespeichert ist, um ein Verfahren nach einem der Ansprüche 1-11 durchzuführen, wenn das Programmprodukt auf einem Computer ausgeführt wird.

10. Datenverarbeitungssystem, insbesondere zum Ausführen eines Verfahrens nach einem der Ansprüche 1-11.

a) vor der (rigiden) Registrierung        b) ein Zwischenschritt der Registrierung

c) nach der Registrierung

Figur 1: Die markierten Zentrosomen auf Chromosomen in einem Zellkern, der sich bewegt. Grün: erster Zeitschritt, Rosa: 2. Zeitschritt. Die Korrespondenzen sind vor der globalen Registrierung automatisch mittels eines Trackingverfahrens nicht zu finden, aber danach offensichtlich.

ca. 8 % beste Confiner Paare      ca.    10 – 15 %            ca. 18 %

ca. 30 %          ca. 45%          ca. 15 % stärker gestutzt

Figur 2: Registrierungs-Resultate für affine Registrierung aufgrund der Confiner-Schwerpunkte von den Confiner-Paaren mit geringstem relPos-Fehler. Im Bild rechts unten wurden ungefähr 120 Paare beibehalten, in den anderen Bildern 190. Die besten Resultate wurden für 10-15% beibehaltene Confiner-Paare erhalten, sie sind (visuell) fast identisch. Um den Bereich zu vergrößern ist eine Methode in Untersuchung, die zunächst die Dichte der relPos-Verteilung für alle Confiner-Paare bestimmt und dann auf Grundlage der größten Dichte auswählt.

(a)          (b)

(c)          (d)          (g)

(e)　　　　　　　　　　(f)　　　　　　　　　　(h)

Figur 3: Eine gute Wahl der Ausgangs-Kontrollpunkte (A-Landmarken) ermöglicht eine realistische (natürliche)
Bewegung: Diese entspricht hier (a,b) Verformungen, die auftreten wenn beispielsweise ein Gummi-Klotz von oben
eingedrückt wird; insbesondere tritt oben eine stärkere Verformung auf als unten. (c-f) Einfluß der Lage der A-
Lanmarken (bei gleicher Anzahl) auf das Resultat: Datenmenge in schwarz, Referenzmenge rosa.
(g,h) Illustration der Wirkungsweise von 2D dünnen-Platten Splines für gegebene Kontrollpunkte und deren
Verschiebungsvektoren.

(a)　　　　　　　　　　(b)　　　　　　　　　　(c)

(d)　　　　　　　　　　(e)　　　　　　　　　　(f)

(g)        (h)        (i)

(j)        (k)        (l)        (m)

Figur 4: Nicht-rigide Registrierung (nach affiner Vorregistrierung) der Original-Grenzlinie Hessens und einer künstlichen Verformung dieser Linie. Links: Datenpunkte (schwarz) und Modellpunkte (rosa) vor der Registrierung. Die A-Landmarken werden durch kleine Bällchen dargestellt. Mitte: nach der Registrierung. Rechts: nur affin verformte Datenpunktmenge sowie Modellpunkte (unverformt), wobei die von dem Registrierungsalgorithmus gefundenen räulichen Entsprechungen durch Verbindungslinien angezeigt werden.
(a-c) Cluster-Methode zur Bestimmung der A-Landmarken: Die gezeigten 9 A-Landmarken wurden während der Registrierung schrittweise gemäß des beschriebenen Grob-zu-Fein Schemas eingefügt. (d-f) Die 9 A-Landmarken wurden mit der Octree-Methode gesetzt. Man beachte die falsche Überlagerung auf der gesamten rechten Seite der Figur. (g-i) Wie in (a-c), nur dass zu jeder Punktmenge 10% Störpunkte mit dem Zufallsgenerator hinzugefügt wurden. Die Entsprechungen werden immer noch wie in (a-c) Korrekt gefunden, doch waren mehr A-Landmarken nötig. . (j-m) Detail-Ansicht eines anderen Beispiels. (j-l) Octree-Methode. Durch schrittweise Erhöhung der Freiheitsgrade rücken die Punktmengen einander näher, aber die Form wird zerstört. Die Pfeile in (j) zeigen auf Stellen, die zur Überlagerung kommen sollten. (m) Richtige Registrierung der gleichen Region mit der Cluster-Methode unter Verwendung von wesentlich weniger Kontrollpunkten (Freiheitsgraden). Mehr Freiheitsgrade verbessern das Resultat.

(a)

(b)

(c)

(d)

Figur 5: 2-D Registrierungs-Resultate mit bekannter Muster-Lösung. Jedes Symbol entspricht einer Reihe von 35 Registrierungen (alles in allem über 800 Einzelexperimente). Gezeigt werden die Durchschnittswerte der Abweichungen der (mittels Registrierung) transformierten Punkte von der Muster-Lösung (mit einem Balken, der die halbe Standartabweichung darstellt). Ein geringerer Wert gehört zu einer besseren Registrierung. Die Kontrollpunkte der bekannten Zufallsdeformierungen (interpoliert mit Gausskernen) wurden um druchschnittlich 10 (a), 13 (b), 15 (c) und 18 (d) Längeneinheiten verschoben. In jedem Diagramm entsprechen die beiden Symbole ganz links einer Registrierung auf gröbstem Niveau (Octree-Niveau 3 bzw. 9 Kontrollpunkte), die in der Mitte einer Registrierung auf mittlerem Niveau (ON 4 bzw. 21 KP) und diejenigen ganz rechts einer Registrierung auf feinem Niveau (ON 5 bzw. 53 KP).

Psi für alle Experimente

Methode A, Niveau 4

Methode A, Niveau 5

Legende: LM = A-Landmarken

Methode B, Niveau 4

Methode B Niveau 5

Methode C, 125 Kontrollpunkte

Methode C, 64 KPs

Methode C, 271 KPs

Figur 6: Für 3 verschiedene Bewegungsmodelle wurden je neun Einzelregistrierungen durchgeführt und bewertet (mittels der Abweichung Psi zur Musterlösung wie in der Figur zuvor, der Biegeenergie U_bend und dem Wert des Fehlerfunktionals C): Methoden A und C sind die bereits in der Figur zuvor verglichenen Methoden zur Bestimmung der A-Landmarken (A Octree-Methode, C Cluster-Methode), Mehtode B ist eine Variante der Methode A, die gleich auf feinstem Niveau registriert, dafür aber mit einem sehr hohen Regularisierungsparameter beginnt und diesen schrittweise abkühlt.

Figur 7: 3D Beispiel: Femur-Knochen vor (links) und nach (rechts) nicht-rigider Registrierung, wobei die A-Landmarken mit der Cluster-Methode gesetzt wurden. Gegenüber der Octree-Methode konnten 60% der A-Landmarken gespart werden.

c) Fehler gegenüber affiner Referenztransformation

a) Registrierung mit 8 Kontrollpunkten

b)   Registrierung mit 67 Kontrollpunkten

Figure 8:  Visualisierung der Bewegung.  a + b) Die räumliche Bewegung wird durch das Referenzgitter veranschaulicht, das auch animiert dargestellt werden kann. Die globale (nicht affine) Verdrehung der oberen gegenüber der unteren Hälfte des Femurknochens kann in a) deutlich gesehen werden. Bei feinerer Registrierung in b) kommt der kleine Trokantor (in der unteren Hälfte) besser zur Überlagerung, die globale Verdrehung ist weniger deutlich als in a) zu sehen, die lokale dafür deutlicher.  Der Fehler gegenüber der best-fittenden affinen Referenz-Transformation ist in c) farbkodiert dargestellt.

Figur 9: Obere Reihe: Bildfolge einer Zellkernoberfläche (Lamina) während des Zusammenbruchs selbiger im Mitosezyklus. Es entsteht ein Loch in der Lamina an der in c markierten Stelle, ebenfalls auf d sichtbar. In der unteren Reihe werden die zu je zwei aufeinanderfolgenden Zeitschritten gehörenden (e gehört zu a und b, f zu b und c, etc.), mittels der beschriebenen Registrierungs-Technik berechneten, Geschwindigkeiten in jedem Punkt der Bildebene Grauwert-kodiert. Die Bewegung wird durch die Confiner der Geschwindigkeits-Absolutbeträge karakterisiert. Die äußeren Konturen dieser Confiner sind als Linien sichtbar gemacht. Innerhalb der der Confiner ist die Bewegung homogen. So ist sie vor der Entstehung des Lochs homogener und so gerichtet, dass dort eine starke Spannung auftritt, wo nachher das Loch entsteht. An dieser Stelle selbst ist die Geschindigkeit in f am geringsten (nahezu schwarz). Nach der Bildung des Lochs verliert die Bewegung an Homogenität: es gibt zahlreiche kleine Confiner.

Figur 10: Bahnen gemäß Visualisierungsmodul 4b)

Figure 11 Oben: Zwei Bilder einer Zeitfolge sich bewegender Zellen; Mitte und unten:
Mittels relPos ausgewählte korrespondierende Confiner-Paare (deren Konturen hier
visualisiert sind; spiegelverkehrt, in weiss: outlier-Punkte); Mitte (vonlinks nach rechts):
initiale Überlagerung, Registrierung mit 5, 7 Kontrollpunkten; Unten Registrierung mit 11
und mit 17 Kontrollpunkten.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **BARRON J. L. et al.** Performance of optical flow techniques. *Int. J. Comp. Vision,* 1994, vol. 12, 43-77
- **F. GERMAIN et al.** Characterization of Cell Deformation and Migration using a parametric estimation of image motion. *IEEE Trans. Biomed. Eng.,* 1999, vol. 46, 584-600
- **J.M. ODOBEZ ; P. BOUTHEMY.** Detection of multiple moving objects using multiscale MRF with camera motion compensation. *ICIP'94*
- **A. BOESNACH et al.** Compensation of motion artifacts in MR mammography by elastic deformation. *SPIE Medical Imaging,* 2001
- **FERRANT et al.** Real-time simulation and visualization of volumetric brain deformation for image guided neurosurgery. *SPIE Medical Imaging,* 2001
- **MATTES ; DEMONGEOT.** Structural outlier detection for automatic landmark extraction. *SPIE Medical Imaging,* 2001, vol. 4322 (I), 602-610
- **SZELISKI ; LAVALLÉE.** *IJCV,* 1996
- **CHUI ; RANGARAJAN.** *CVPR,* 2000
- **T. F. COOTES ; C.J. TAYLOR ; D.H. COOPER ; J. GRAHAM.** Active shape models - their training and their application. *Computer Vision and Image Understanding,* 1995, vol. 61, 38-59
- Building a Complete Surface Model from sparse data using statistical shape models: application to computer assisted knee surgery. **M. FLEUTE ; S. LAVALLÉE.** MICCAI'98, 880-887, LCNS. Springer-Verlag, 1998, 880-887
- **G.-H. COTTET ; L. GERMAIN.** Image processing through reaction combined with nonlinear diffusion. *Math. Comp.,* 1993, vol. 61, 659-673
- **J. MATTES ; D. TRYSTRAM ; J. DEMONGEOT.** Parallel image processing using neural networks: applications in contrast enhancement of medical images. *Parallel Processing Letters,* 1998, vol. 8, 63-76
- **M. J. BLACK ; NS D. HEEGER.** *IEEE Trans. on Image Processing,* 1998, vol. 7, 421
- **MATTES ; DEMONGEOT.** Tree representation and implicit tree matching for a coarse to fine image matching algorithm. *MICCAI,* 1999
- **R. DERICHE.** Using Canny's criteria to derive a recursively implemented optimal edge detector. *Int. J. Comput. Vision,* 1987, 167-187
- **O. MONGA ; S. BENAYOUN ; O. FAUGERAS.** From partial derivatives of 3D density images to ridge lines. *IEEE, CVPR'92,* 1992, 354-359
- **J.-P. THIRION.** New feature points based on geometric invariants for 3D image registration. *Int. J. Comput. Vision,* 1996, vol. 18, 121-137
- **K. ROHR.** On 3D differential operators of detecting point landmarks. *Image and Vision Computing,* 1997, vol. 15, 219-233
- **J. MATTES ; J. DEMONGEOT.** *SPIE Medical Imaging,* 2001
- **LAVALLÉE ; SZELISKI.** *IEEE Trans. PAMI,* 1995
- **ROCHE ; MALANDAINE ; AYACHE ; PRIMA.** MICCAI'99, LNCS. Springer Verlag, 1999
- A point set registration algorithm using a motion model based on thin-plate splines and point clustering, in Pattern recognition. **FIERES et al.** DAGM 2001, vol. 2191 of LNCS. Springer-Verlag, 2001, vol. 2191, 76-83
- **BESL ; MCKAY.** *IEEE Trans. PAMI,* 1992
- **FIERES et al.** *Fromel unten,* 2001
- **SZELISKI ; LAVALLEE.** *Octree-Spline,* 1994
- **MATTES ; DEMONGEOT.** *SPIE Medical Imaging,* 2001
- **BILDRAUM ; BRETT ; TAYLOR.** *Image and Vision Computing,* 2000, vol. 18, 739-748
- Bookstein, Principal Warps: Thin-plafie splines and the decomposition of deformations. *IEEE Trans. PAMI,* 1995, vol. 11, 567-585
- **DUCHON.** Interpolation des fonctions de deux variables suivant le principe de la flexion des plaques minces. *RAIRO Analyse Numérique,* 1976, vol. 10, 5-12
- *Bookstein, IEEE Trans. PAMI,* 1995